# EUROPEAN PATENT SPECIFICATION

(11) **EP 2 868 958 B1**
(45) Date of publication and mention of the grant of the patent: **14.09.2016**
(21) Application number: 14174852.5
(22) Date of filing: 27.06.2014
(51) Int. Cl.: F16L 27/093, B60T 17/04

(54) **Saddle-ride type vehicle**
Sattelfahrzeug
Véhicule à monture de selle

(30) Priority: 31.10.2013 JP 2013226881
(43) Date of publication of application: 06.05.2015
(73) Proprietor: Yamaha Hatsudoki Kabushiki Kaisha, Iwata-shi, Shizuoka 438-8501 (JP)
(72) Inventor: Niimi, Hiroshi, Shizuoka, 4388501 (JP); Nakashima, Junji, Shizuoka, 4388501 (JP)
(74) Representative: Moreland, David

(56) References cited:
- DE-A1-102006 020 193
- JP-A- 2011 046 247
- US-A1- 2013 001 942

## Description

### FIELD OF INVENTION

The present invention relates to a saddle-ride type vehicle or straddle-type vehicle.

### BACKGROUND TO INVENTION

A type of motorcycle is equipped with a fluid pressure control device for ABS (Antilock Brake System). For example, four brake hoses are connected to the fluid pressure control device, while respectively extending from a front wheel brake master cylinder, a rear wheel brake master cylinder, a front wheel brake caliper and a rear wheel brake caliper.

The four brake hoses are respectively connected to a brake hose connecting unit of the fluid pressure control device through fittings, while being respectively positioned so as to extend in desired directions. The fittings are respectively fixed by means of bolts screwed into bolt holes bored in the brake hose connecting unit.

Japanese Patent Application Publication No. JP-A-2011-25777 (NISSIN KOGYO KK) proposes a method of causing a protruded portion of each fitting to make contact with a pin raised on the brake hose connecting unit in order to prevent each brake hose from rotating when each fitting is fixed by means of the bolt. In the method described in the Publication No. JP-A-2011-25777, it is required to prepare the same number of pins as the number of fittings. Hence, this method results in drawbacks , including an increase in the number of components, an increase in weight, and an increase in size of the fluid pressure control device.

The present invention has been produced in view of the aforementioned situation. It is an object of at least one aspect of the present invention to provide a saddle-ride type vehicle that can suppress an increase in a number of components, weight, and/or size of a fluid pressure control device.

US 2013/0001942 describes a hydraulic unit for an anti-lock braking system, wherein the hydraulic unit includes a block. A plurality of brake lines are coupled to the block with a corresponding set of hydraulic fittings. Each fitting includes a hollow bolt and a banjo block. The hollow bolts extend through axial apertures of bores in the respective banjo blocks to mechanically couple the banjo blocks to the block of the hydraulic unit and also to establish fluid communication between the block of the hydraulic unit and the brake lines through the banjo fittings. All of the banjo fittings are coupled to ports on a common surface of the block of the hydraulic unit. Each banjo block is shaped so as to have cooperating complimentary skewed side wall surfaces. In particular, a first banjo block is formed as a corner truncated rectangular prism with a skewed side wall surface being provided by the corner truncation of the banjo block, and a complimentary banjo block is provided with a skewed side wall surface provided adjacent to the skewed surface of the first banjo block. In this way each banjo block cooperates with at least one unique adjacent banjo block to ensure not only proper orientation relative to the other fittings and the block of the hydraulic unit, but also that proper assembly takes place with the correct brake lines being provided to the correct ports. By providing each banjo block with a skewed side wall surface in the form of a corner truncation, the brake lines can only be connected together to the correct ports. As the exterior shapes of the side walls of the adjacent banjo blocks cooperate to interfere with each other, assembly of the first banjo block with a prescribed fluid port of a second banjo block when the second banjo block is coupled with the fluid port of the first banjo block is prevented.

### SUMMARY OF INVENTION

Various aspects of the present invention are defined in the independent claims. Some preferred features are defined in the dependent claims.

Described herein for information only is a system comprising a first brake hose, a second brake hose and a fluid pressure control device for a saddle-ride type vehicle. The first and second brake hoses may respectively contain and/or be configured to contain a brake fluid, which may be sealed or sealable therein. The fluid pressure control device may include a brake hose connecting unit and may be configured to control a fluid pressure of the brake fluid to be transferred to a brake element connected to the brake hose connecting unit. The brake hose connecting unit may have first and second fixing or screw holes therein, wherein the first and second fixing or screw holes may be spaced apart, e.g. provided at an interval. The first fixing or screw hole may be connected or connectable to the first brake hose. The second fixing or screw hole may be connected or connectable to the second brake hose. The first brake hose may include a first hose main body, a first fitting and a first rotatable fixing member. The first rotatable fixing member may comprise a first threaded member (such as a first bolt). The first fitting may be coupled or couplable to the fluid pressure control device. The first rotatable fixing member may be fixed/rotated/screwed or fixable/rotatable/screwable into the first fixing hole so as to fix the first fitting to the brake hose connecting unit. The second brake hose may include a second hose main body, a second fitting and a second rotatable fixing member. The second rotatable fixing member may comprise a second threaded member (such as a second bolt). The second fitting may be coupled or couplable to the fluid pressure control device. The second rotatable fixing member may be fixed/rotated/screwed or fixable/rotatable/screwable into the second fixing hole so as to fix the second fitting to the brake hose connecting unit. The first fitting may comprise a first insertion-through part. The first fitting may comprise a first attachment tube part. The first fitting may comprise a first protruded part. The first insertion-through part may include a first insertion-through hole through which the first rotatable fixing member may be inserted or insertable. The first attachment tube part may be connected to the first insertion-through part and may be attached or attachable to the first hose main body. The first protruded part may extend laterally of the first insertion-through part. The first protruded part may abut, contact and/or be contactable with the second fitting when the first fitting is fixed to the brake hose connecting unit.

The first insertion-through part may have an annular shape.

The first protruded part may protrude from a first lateral or side surface of the first insertion-through part.

The first and/or second fixing holes may be or comprise screw holes. The first and/or second rotatable fixing members may be screwed or screwable into the respective first and/or second fixing hole. The first and/or second fixing holes may be bored into the brake hose connecting unit.

A saddle-ride type vehicle described herein comprises or includes a first brake hose, a second brake hose and a fluid pressure control device, which may be comprised in the above system. The first and second brake hoses respectively contain and/or are configured to contain a brake fluid, which may be sealed or sealable therein. The fluid pressure control device may include a brake hose connecting unit and may be configured to control a fluid pressure of the brake fluid to be transferred to a brake element connected to the brake hose connecting unit. The brake hose connecting unit may have first and second fixing holes therein, wherein the first and second fixing holes may be spaced apart, e.g. provided at an interval. The first fixing hole may be connected or connectable to the first brake hose. The second fixing hole may be connected or connectable to the second brake hose. The first brake hose may include a first hose main body, a first fitting and a first rotatable fixing member (such as a first threaded member, e.g. a first bolt). The first fitting may be coupled or couplable to the fluid pressure control device. The first rotatable fixing member may be rotated or rotatable into the first fixing hole so as to fix the first fitting to the brake hose connecting unit. The second brake hose may include a second hose main body, a second fitting and a second rotatable fixing member (such as a second threaded member, e.g. a second bolt). The second fitting may be coupled or couplable to the fluid pressure control device. The second rotatable fixing member may be rotated or rotatable into the second fixing hole so as to fix the second fitting to the brake hose connecting unit. The first fitting may have a first insertion-through part, a first attachment tube part and a first protruded part. The first insertion-through part may include a first insertion-through hole through which the first rotatable fixing member is inserted or insertable. The first attachment tube part may be connected to the first insertion-through part and may be attached or attachable to the first hose main body. The first protruded part may protrude from and/or laterally of a first lateral surface of the first insertion-through part. The first protruded part may abut, contact and/or be contactable with the second fitting.

The first insertion-through part may have an annular shape.

The first protruded part may protrude from a first lateral or side surface of the first insertion-through part.

The first and/or second fixing holes may be or comprise screw holes. The first and/or second rotatable fixing members may be screwed into the respective first and/or second fixing hole. The first and/or second fixing holes may be bored into the brake hose connecting unit. According to the saddle-ride type vehicle of an aspect of the present invention, even when the first fitting is co-rotated with the first rotatable fixing member when fixing the first fitting by rotating or screwing the first rotatable fixing member into the first fixing hole of the brake hose connecting unit of the fluid pressure control device, the co-rotation of the first fitting may be stopped in the position that the first protruded part makes contact with the second fitting. Therefore, the first fitting can be inhibited from being co-rotated with the first rotatable fixing member without using any components other than the first and second brake hoses. Consequently, it may be possible to suppress an increase in a number of components, weight, and/or size of the fluid pressure control device. Further, the positional relationship between the first protruded part and the first attachment tube part may be predetermined such that the first attachment tube part is located in a predetermined position when the first protruded part of the first fitting makes contact with a predetermined part of the second fitting. With such a configuration, the first attachment tube part may be set in the predetermined position only by causing the first protruded part to make contact with the predetermined part of the second fitting.

The second fitting may have a second insertion-through part and may have a second attachment tube part. The second insertion-through part may have an annular shape. The second insertion-through part may include a second insertion-through hole through which the second rotatable fixing member is inserted or insertable. The second attachment tube part may be connected to the second insertion-through part and may be attached or attachable to the second hose main body. The first protruded part may abut, contact or be contactable with a second lateral or side surface of the second insertion-through part.

As such, according to a saddle-ride type vehicle as described herein, even when the first fitting is co-rotated with the first rotatable fixing member, the co-rotation of the first fitting may be stopped in the position in which the first protruded part makes contact with the second lateral surface of the second insertion-through part. Therefore, it may be possible to prevent the first protruded part from interfering with the second attachment tube part. Further, it may be possible to extend the region contacted by the first protruded part when the first protruded part is contacted with the second lateral surface of the second insertion-through part in comparison with an arrangement in which the first protruded part is contacted to the surface of the second attachment tube part. As a result, in predetermining the contact part of the second fitting, i.e., the part contacted by the first protruded part, it may be possible to extend a region allowed to be set as the contact part. The first protruded part may thereby be easily contacted to the second fitting.

The second fitting may have a second protruded part that may protrudes from or laterally of the second lateral surface of the second insertion-through part. The second protruded part may be contacted or contactable with the first fitting.

As such, according to a saddle-ride type vehicle of the present invention, even when the second fitting is co-rotated with the second rotatable fixing member in fixing the second fitting by rotating or screwing the second rotatable fixing member into the second fixing hole of the brake hose connecting unit of the fluid pressure control device, the co-rotation of the second fitting may be stopped in the position in which the second protruded part makes contact with the first fitting. Therefore, the second fitting may be inhibited from being co-rotated with the second rotatable fixing member without using any components other than the first and second brake hoses. Consequently, it may be possible to further suppress an increase in a number of components, weight, and/or size of the fluid pressure control device. Further, when the positional relationship between the second protruded part and the second attachment tube part is predetermined similarly to the aforementioned positional relationship between the first protruded part and the first attachment tube part, the second attachment tube part may be set in a predetermined position only by causing the second protruded part to make contact with a predetermined part of the first fitting.

The second protruded part may abut, contact or be contactable with the first lateral or side surface of the first fitting.

As such, according to a saddle-ride type vehicle described herein, even when the second fitting is co-rotated with the second rotatable fixing member, the co-rotation of the second fitting may be stopped in the position in which the second protruded part makes contact with the first lateral or side surface of the first insertion-through part. Therefore, it may be possible to prevent the second protruded part from interfering with the first attachment tube part. Further, it may be possible to extend the region contacted by the second protruded part when the second protruded part contacts the first lateral surface of the first insertion-through part in comparison with an arrangement in which the second protruded part contacts the surface of the first attachment tube part. As a result, in predetermining the contact part of the first fitting, i.e., the part to which the second protruded part contacts, it may be possible to extend a region allowed to be set as the contact part. The second protruded part may thereby be easily contacted to the first fitting.

The first protruded part may protrude on a left or counter-clockwise side of a direction directed from a first axis of the first rotatable fixing member to a second axis of the second rotatable fixing member in a plan view of a surface of the brake hose connecting unit.

As such, according to a saddle-ride type vehicle as described herein, in fixing the first fitting by rotating or screwing the first rotatable fixing member into the first fixing hole of the
brake hose connecting unit of the fluid pressure control device, the first protruded part may contact the second fitting from the left or counter-clockwise side when the first rotatable fixing member is tightened in the clockwise direction and the first fitting is co-rotated therewith in the clockwise direction. Therefore, the first protruded part may be more easily contacted to the second fitting in comparison with a structure in which the first protruded part protrudes on the right or clockwise side of the direction directed from the first axis to the second axis.

A protruded length of the first protruded part may be greater than an interval or distance between the first insertion-through part and the second insertion-through part in a plan view of a surface of the brake hose connecting unit.

As such, according to a saddle-ride type vehicle as described herein, the protruded length of the first protruded part may be greater than the interval between the first insertion-through part and the second insertion-through part. Therefore, even when the first fitting is co-rotated with the first rotatable fixing member, the first protruded part may reliably contact the second lateral or side surface of the second insertion-through part.

The interval or distance between the first insertion-through part and the second insertion-through part may be less than an outer diameter of the first insertion-through part in the plan view of the surface of the brake hose connecting unit.

As such, according to a saddle-ride type vehicle as described herein, the interval between the first insertion-through part and the second insertion-through part may be less than the outer diameter of the first insertion-through part. Therefore, the first fitting and the second fitting may be disposed sufficiently close to each other. In other words, the first fitting and the second fitting may be compactly disposed. Consequently, it may be possible to further suppress increase in size of the fluid pressure control device.

The saddle-ride type vehicle may include a third brake hose containing or configured to receive the brake fluid, which may be sealed or sealable therein. The brake hose connecting unit may have a third fixing hole therein. The third brake hose may have a third hose main body, a third fitting and a third rotatable fixing member, such as a third threaded member, e.g. a third bolt. The third fitting may be coupled or couplable to the fluid pressure control device. The third rotatable fixing member may be rotated or rotatable into the third fixing hole of the brake hose connecting unit so as to fix the third fitting to the brake hose connecting unit. The third fitting may have a third insertion-through part, a third attachment tube part and a third protruded part. The third insertion-through part may have an annular shape. The third insertion-through part may include a third insertion-through hole through which the third rotatable fixing member is inserted or insertable. The third attachment tube part may be connected to the third insertion-through part and may be attached or attachable to the third hose main body. The third protruded part may protrude laterally of the third insertion-through part. The third protruded part may protrude from or laterally of a third lateral or side surface of the third insertion-through part. The third protruded part may abut, contact or be contactable with the first fitting.

The third fixing hole may be or comprise a screw hole. The third rotatable fixing member may screwed into the third fixing hole of the brake hose connecting unit. The third fixing hole may be bored into the brake hose connecting unit. As such, according to the saddle-ride type vehicle of the present invention, even when the third fitting is co-rotated with the third rotatable fixing member in fixing the third fitting by rotating or screwing the third rotatable fixing member into the third fixing hole of the brake hose connecting unit of the fluid pressure control device, the co-rotation of the third fitting may be stopped in the position that the third protruded part makes contact with the first fitting. Therefore, the third fitting may be inhibited from being co-rotated with the third rotatable fixing member without using any components other than the first and third brake hoses. Consequently, it may be possible to further suppress an increase in number of components, weight, and/or size of the fluid pressure control device. Further, when the positional relationship between the third protruded part and the third attachment tube part is predetermined similarly to the aforementioned positional relationship between the first protruded part and the first attachment tube part, the third attachment tube part can be set in a predetermined position only by causing the third protruded part to make contact with a predetermined part of the first fitting.The saddle-ride type vehicle may further include a fourth brake hose containing or configured to receive the brake fluid, which may be sealed or sealable therein. The brake hose connecting unit may have a fourth fixing hole therein. The fourth brake hose may comprise a fourth hose main body, a fourth fitting and a fourth rotatable fixing member, such as a threaded member, e.g. a fourth bolt. The fourth fitting may be coupled to the fluid pressure control device. The fourth rotatable fixing member may be rotated or rotatable into the fourth fixing hole so as to fix the fourth fitting to the brake hose connecting unit. The fourth fitting may comprise a fourth insertion-through part, a fourth attachment tube part and a fourth protruded part. The fourth insertion-through part may have an annular shape. The fourth insertion-through part may have a fourth insertion-through hole through which the fourth rotatable fixing member is inserted or insertable. The fourth attachment tube part may be connected to the fourth insertion-through part and may be attached to the fourth hose main body. The fourth protruded part may protrude laterally of the fourth insertion-through part. The fourth protruded part may protrude from or laterally of a fourth lateral or side surface of the fourth insertion-through part. The fourth protruded part may abut, contact or be contactable with the second fitting.

The fourth fixing hole may be or comprise a screw hole. The fourth rotatable fixing member may screwed into the fourth fixing hole of the brake hose connecting unit. The fourth fixing hole may be bored into the brake hose connecting unit. As such, according to a saddle-ride type vehicle of the present invention, even when the fourth fitting is co-rotated with the fourth rotatable fixing member in fixing the fourth fitting by rotating or screwing the fourth rotatable fixing member into the fourth fixing hole of the brake hose connecting unit of the fluid pressure control device, the co-rotation of the fourth fitting may be stopped in the position in which the fourth protruded part contacts the second fitting. Therefore, the fourth fitting may be inhibited from being co-rotated with the fourth rotatable fixing member without using any components other than the second and fourth brake hoses. Consequently it may be possible to further suppress an increase in a number of components, weight, and/or size of the fluid pressure control device. Further, when the positional relationship between the fourth protruded part and the fourth attachment tube part is predetermined similarly to the aforementioned positional relationship between the first protruded part and the first attachment tube part, the fourth attachment tube part may be set in a predetermined position only by causing the fourth protruded part to make contact with a predetermined part of the second fitting.

The third rotatable fixing member and the fourth rotatable fixing member may be disposed so as to be line or mirror symmetric to each other with reference to a bisector of a line segment connecting a first axis, such as a longitudinal or rotation axis, of the first rotatable fixing member and a second axis, such as a longitudinal or rotation axis, of the second rotatable fixing member. Further, an interval between the third rotatable fixing member and the fourth rotatable fixing member may be set to be greater than an interval between the first rotatable fixing member and the second rotatable fixing member.

As such, according to a saddle-ride type vehicle as described herein, the third rotatable fixing member and the fourth rotatable fixing member may be separated away from each other with reference to the bisector of the line segment connecting the first axis and the second axis. Accordingly, the third insertion-through part and the fourth insertion-through part may be inhibited from interfering with each other. Further, since the interval between the third rotatable fixing member and the fourth rotatable fixing member may be greater than that between the first rotatable fixing member and the second rotatable fixing member, the first rotatable fixing member and the third rotatable fixing member may be herein inhibited from interfering with each other while the second rotatable fixing member and the fourth rotatable fixing member may be inhibited from interfering with each other compared to a setting in which the interval produced between the third rotatable fixing member and the fourth rotatable fixing member is equivalent to that produced between the first rotatable fixing member and the second rotatable fixing member.

A first connecting line connecting the first axis of the first rotatable fixing member and a third axis, such as a longitudinal or rotation axis, of the third rotatable fixing member may intersect with a second connecting line connecting the second axis of the second rotatable fixing member and a fourth axis, such as a longitudinal or rotation axis, of the fourth rotatable fixing member.

As such, according to a saddle-ride type vehicle as described herein, the first to fourth fittings may be disposed in a V-shape. Accordingly, the first brake hose and the third brake hose may be easily directed in the same direction, while the second brake hose and the fourth brake hose may be easily directed in the same direction. Further, the first to fourth fittings may be compactly disposed in a direction arranged in parallel to the line connecting the first axis and the second axis in comparison with a structure in which the first to fourth fittings are disposed in a straight line. Yet further, the first to fourth fittings may be compactly disposed in a direction arranged perpendicularly to the line connecting the first axis and the second axis in comparison with a structure in which the first to fourth fittings are disposed in a rectangular shape.

The first connecting line and the second connecting line may form an acute angle.

As such, according to a saddle-ride type vehicle as described herein, the interval produced between the third fitting and the fourth fitting may be further reduced in comparison with a structure in which the first connecting line and the second connecting line form an obtuse angle. Accordingly, the first to fourth fittings may be compactly disposed, while being disposed closely to each other.

The fluid pressure control device may include first and second internal flow paths, a first communication flow path and a second communication flow path. The first and second internal flow paths may be produced inside the brake hose connecting unit. The first communication flow path may be provided inside the first fitting and the first rotatable fixing member so as to communicate with the first internal flow path. The second communication flow path may be provided inside the second fitting and the second rotatable fixing member so as to communicate with the second internal flow path.

Accordingly, the first and second brake hoses may be reduced in their sizes in comparison with a structure in which the communication flow path is produced outside the fitting and the rotatable fixing member.

Described herein for information only is a saddle-ride type vehicle comprising:
first and second brake hoses respectively containing a brake fluid sealed therein; and
a fluid pressure control device including a brake hose connecting unit and being configured to control a fluid pressure of the brake fluid to be transferred to a brake element connected to the brake hose connecting unit, the brake hose connecting unit having first and second screw holes bored therein at an interval, the first screw hole being connected to the first brake hose, the second screw hole being connected to the second brake hose,
the first brake hose including a first hose main body, a first fitting and a first bolt, the first fitting being coupled to the fluid pressure control device, the first bolt being screwed into the first screw hole so as to fix the first fitting to the brake hose connecting unit,
the second brake hose including a second hose main body, a second fitting and a second bolt, the second fitting being coupled to the fluid pressure control device, the second bolt being screwed into the second screw hole so as to fix the second fitting to the brake hose connecting unit,
the first fitting having a first insertion-through part, a first attachment tube part and a first protruded part,
the first insertion-through part having an annular shape and including a first insertion-through hole through which the first bolt is inserted;
the first attachment tube part being connected to the first insertion-through part and being attached to the first hose main body; and
the first protruded part being protruded from a first lateral surface of the first insertion-through part, and
the first protruded part being contacted to the second fitting.

Overall, even when the first fitting is co-rotated with the first rotatable fixing member in fixing the first fitting by rotating or screwing the first rotatable fixing member into the first fixing hole of the brake hose connecting unit of the fluid pressure control device, the co-rotation of the first fitting may be stopped in the position that the first protruded part makes contact with the second fitting. Therefore, the first fitting may be inhibited from being co-rotated with the first rotatable fixing member without using any components other than the first and second brake hoses. Consequently, it may be possible to suppress an increase in number of components, weight, and/or size of the fluid pressure control device.

### BRIEF DESCRIPTION OF DRAWINGS

Referring now to the attached drawings which form a part of this original disclosure:
- **Figure 1**: a right side view of a saddle-ride type vehicle;
- **Figure 2**: a right side view of a frame structure and a brake hose layout;
- **Figure 3**: a top view of the frame structure and the brake hose layout;
- **Figure 4**: a top view of a fluid pressure control device to which brake hoses are connected;
- **Figure 5**: a top view of the fluid pressure control device from which the brake hoses are disconnected;
- **Figure 6**: an exploded perspective view of a first brake hose; and
- **Figure 7**: a cross-sectional view of the first brake hose.

### DETAILED DESCRIPTION OF DRAWINGS

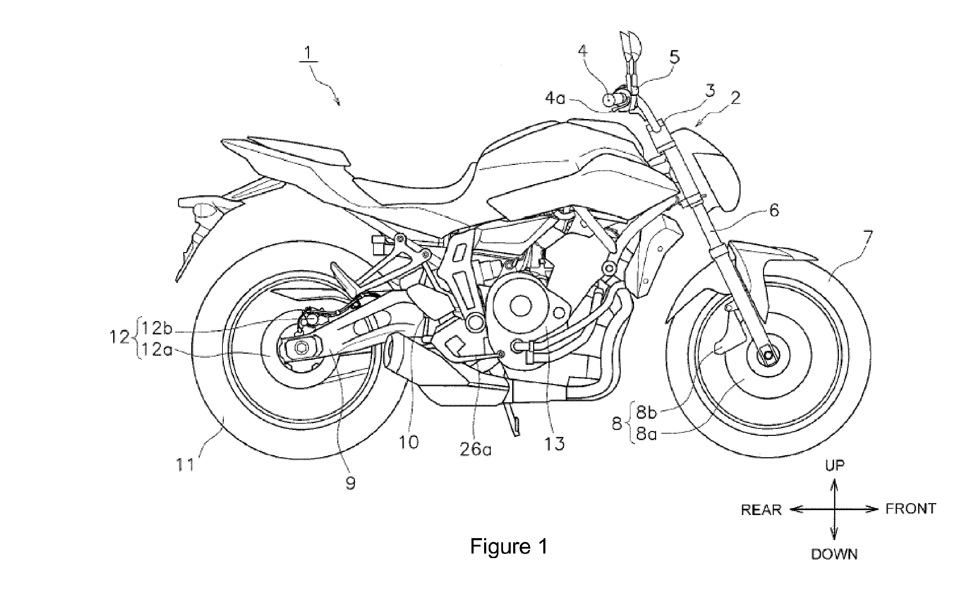

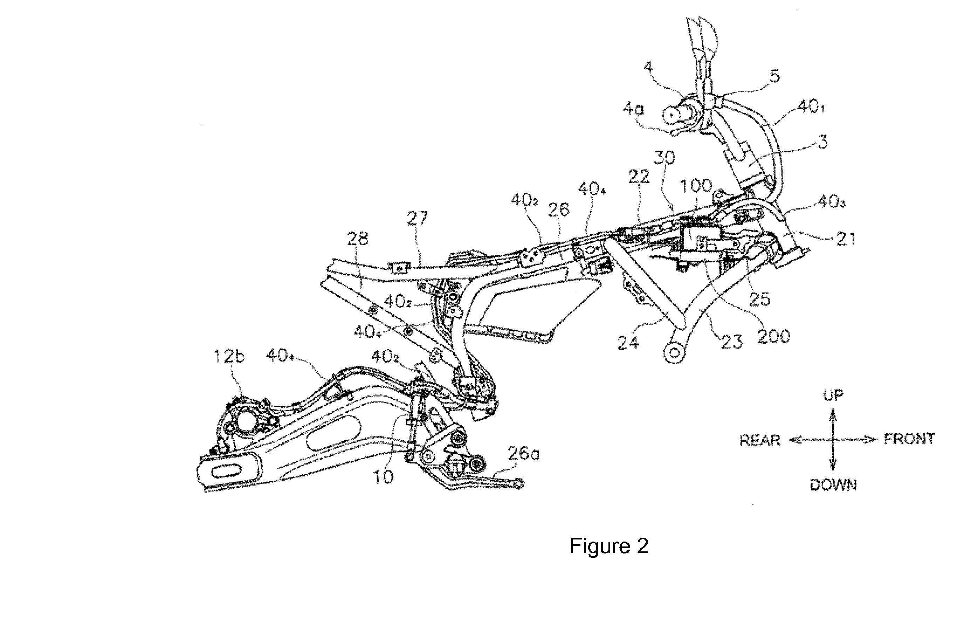

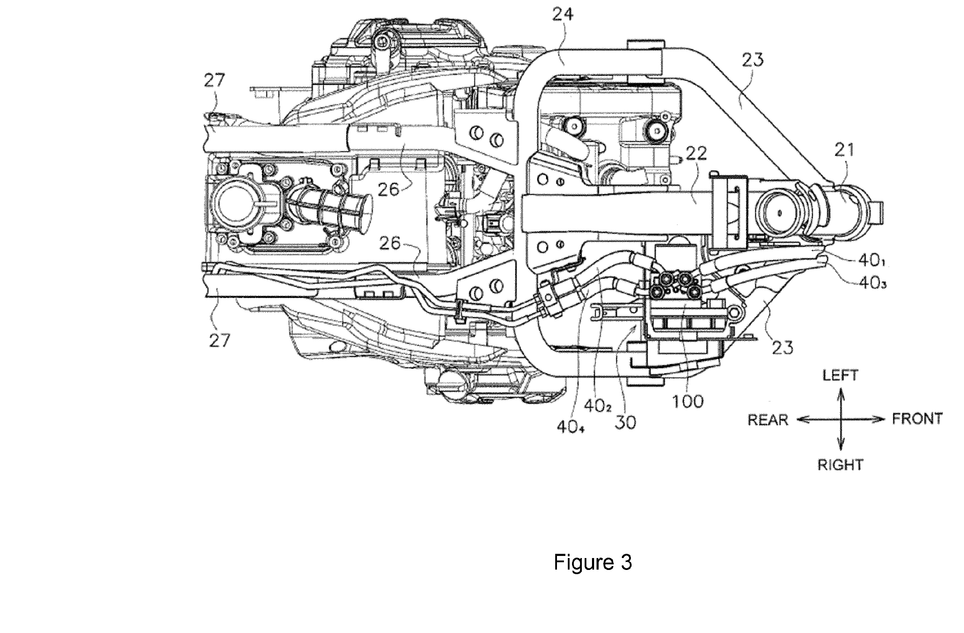

With reference to the drawings, explanation will be made for a schematic structure of a saddle-ride type vehicle 1 according to an exemplary embodiment. Figure 1 is a right side view of the saddle-ride type vehicle 1. Figure 2 is a right side view of a structure of a frame 2 and a layout of brake hoses. Figure 3 is a top view of the structure of the frame 2 and the layout of the brake hoses. In the present exemplary embodiment, the terms "front", "rear", "right" and "left" are defined based on a forward-view direction of a rider seated on a seat.

The saddle-ride type vehicle 1 is a motorcycle. As illustrated in Figures 1 to 3, the saddle-ride type vehicle 1 includes the frame 2, a steering shaft or column 3, a steering handle or handlebars 4, a front wheel master cylinder 5, a front fork 6, a front wheel 7, a front wheel brake device 8, a swing arm 9, a rear wheel master cylinder 10, a rear wheel 11, a rear wheel brake device 12, an engine 13 and a brake fluid pressure control unit 30.

As illustrated in Figures 2 and 3, the frame 2 includes a head pipe 21, a main pipe 22, a pair of down tubes 23 and 23, a cross tube 24, a tension pipe 25, a pair of seat pillars 26 and 26, a pair of seat pipes 27 and 27 and a pair of back stays 28 and 28.

The head pipe 21 is disposed in the middle of a vehicle body in the vehicle width direction. The head pipe 21 is extended in the up-and-down direction. The main pipe 22 is disposed in the middle of the vehicle body in the vehicle width direction. The main pipe 22 is connected to the head pipe 21. The main pipe 22 extends rearwardly from the head pipe 21 along the vehicle body centre. The main pipe 22 is located over the engine 13.

The down tubes 23 and 23 are joined to the head pipe 21, while being located under the main pipe 22. The down tubes 23 and 23 extend rearward and downward, while being separated away from each other in the vehicle width direction. The lower end portions of the down tubes 23 and 23 are coupled to the front part of the engine 13.

The cross tube 24 has a roughly U-shape. The middle part of the cross tube 24 extends in the vehicle width direction. The rear end portion of the main pipe 22 is coupled to the middle part of the cross tube 24. Both end portions of the cross tube 24 are respectively coupled to the rear end portions of the pair of down tubes 23. Both of the end portions of the cross tube 24 are located lower than the middle part thereof.

The tension pipe 25 is disposed in the middle of the vehicle body in the vehicle width direction. The tension pipe 25 is connected to the head pipe 21, while being located under the main pipe 22. The tension pipe 25 extends rearwardly from the head pipe 21. The rear end portion of the tension pipe 25 is coupled to the lower portion of the main pipe 22.

The seat pillars 26 and 26 are connected to the middle part of the cross tube 24. The seat pillars 26 and 26 extend rearwardly from the cross tube 24, and then are downwardly curved to a great extent. The lower end portions of the pair of seat pillars 26 and 26 are made of sheet metal, and a rear wheel brake pedal 26a is attached thereto.

The seat pipes 27 and 27 extend backwardly and upwardly from the curved portions of the respective seat pillars 26 and 26. The back stays 28 and 28 extend backwardly and upwardly from the lower end portions of the respective seat pillars 26 and 26. The back stays 28 and 28 are coupled to the rear end portions of the respective seat pipes 27 and 27.

The steering shaft 3 is turnably supported by the head pipe 21. The steering handle 4 is fixed to the upper end portion of the steering shaft 3. A front wheel brake lever 4a is attached to the steering handle 4. The front wheel master cylinder 5 is fixed to the steering handle 4. When the front wheel brake lever 4a is squeezed, the front wheel master cylinder 5 is configured to pressure-feed brake fluid to a fluid pressure control device 100 of the brake fluid pressure control unit 30.

The front fork 6 is turnably supported by the steering shaft 3, while being coupled to the steering shaft 3 through a bracket. The front wheel 7 is rotatably supported by the front fork 6. A front wheel brake device (brake element) 8 includes a front wheel brake disc 8a and a front wheel brake caliper (brake element) 8b. The front wheel brake disc 8a is fixed to the front wheel 7. The front wheel brake caliper 8b is fixed to the front fork 6. The front wheel brake caliper 8b is configured to press a friction member onto the front wheel brake disc 8a by means of fluid pressure of the brake fluid in order to brake the front wheel brake disc 8a.

The swing arm 9 is supported by the pair of seat pillars 26 and 26 so as to be pivotable up and down. The swing arm 9 extends rearwardly from the pair of seat pillars 26 and 26.

The rear wheel master cylinder 10 is fixed to the pair of seat pillars 26 and 26. When the rear wheel brake pedal 26a is pressed down, the rear wheel master cylinder 10 is configured to pressure-feed the brake fluid to the fluid pressure control device 100 of the brake fluid pressure control unit 30.

The rear wheel 11 is rotatably supported by the swing arm 9. The rear wheel brake device 12 includes a rear wheel brake disc 12a and a rear wheel brake caliper (brake element) 12b. The rear wheel brake disc 12a is fixed to the rear wheel 11. The rear wheel brake caliper 12b is fixed to the swing arm 9. The rear wheel brake caliper 12b is configured to press a friction member onto the rear wheel brake disc 12a in order to brake the rear wheel brake disc 12a.

The engine 13 is disposed rearward of the front wheel 7. The engine 13 is suspended from the pair of down tubes 23 and 23 and the pair of seat pillars 26 and 26.

The brake fluid pressure control unit 30 includes four brake hoses 40 (a first brake hose 40₁, a second brake hose 40₂, a third brake hose 40₃ and a fourth brake hose 40₄), the fluid pressure control device 100 and a support bracket 200. It should be noted that a subscript "₁" is attached to a reference sign for indicating an element relevant to the first brake hose 40₁; a subscript "₂" is attached to a reference sign for indicating an element relevant to the second brake hose 40₂; a subscript "₃" is attached to a reference sign for indicating an element relevant to the third brake hose 40₃; and a subscript "₄" is attached to a reference sign for indicating an element relevant to the fourth brake hose 40₄. In the following reference signs, the aforementioned subscripts are attached thereto for indicating respective elements, while being detached therefrom for collectively indicating the respective elements.

The first brake hose 40₁ is connected to the front wheel master cylinder 5 and the fluid pressure control device 100. The second brake hose 40₂ is connected to the rear wheel master cylinder 10 and the fluid pressure control device 100. The third brake hose 40₃ is connected to the front wheel brake caliper 8b and the fluid pressure control device 100. The fourth brake hose 40₄ is connected to the rear wheel brake caliper 12b and the fluid pressure control device 100.

The fluid pressure control device 100 is configured to regulate the fluid pressure of the brake fluid to be fed to the front wheel brake caliper 8b and the rear wheel brake caliper 12b in order to perform antilock brake control for the front wheel brake device 8 and the rear wheel brake device 12. The fluid pressure control device 100 is disposed on the right side of the main pipe 22. The fluid pressure control device 100 is supported on the support bracket 200. The support bracket 200 is fixed to the main pipe 22 and the right-side down tube 23.

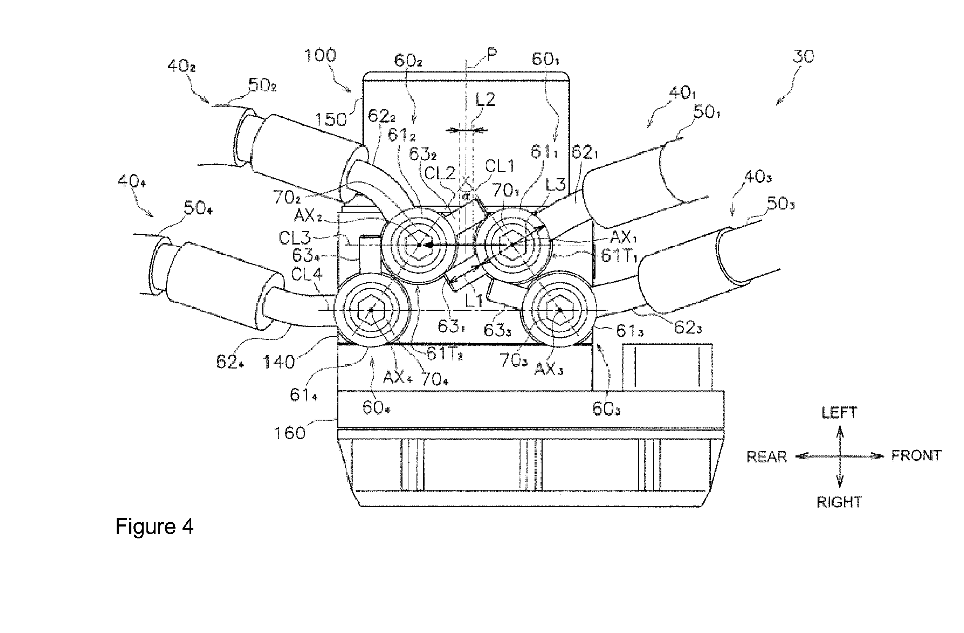

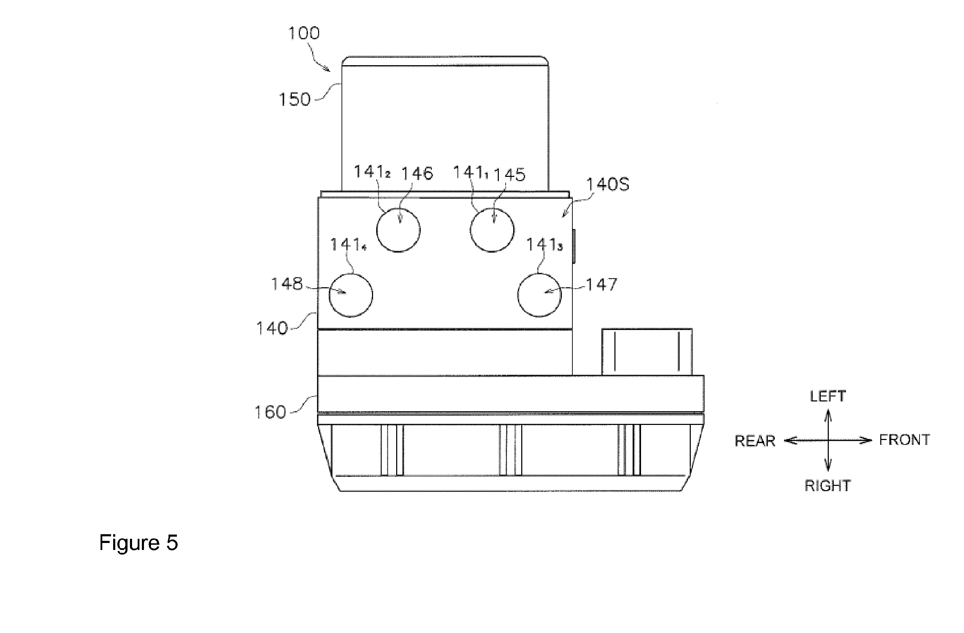

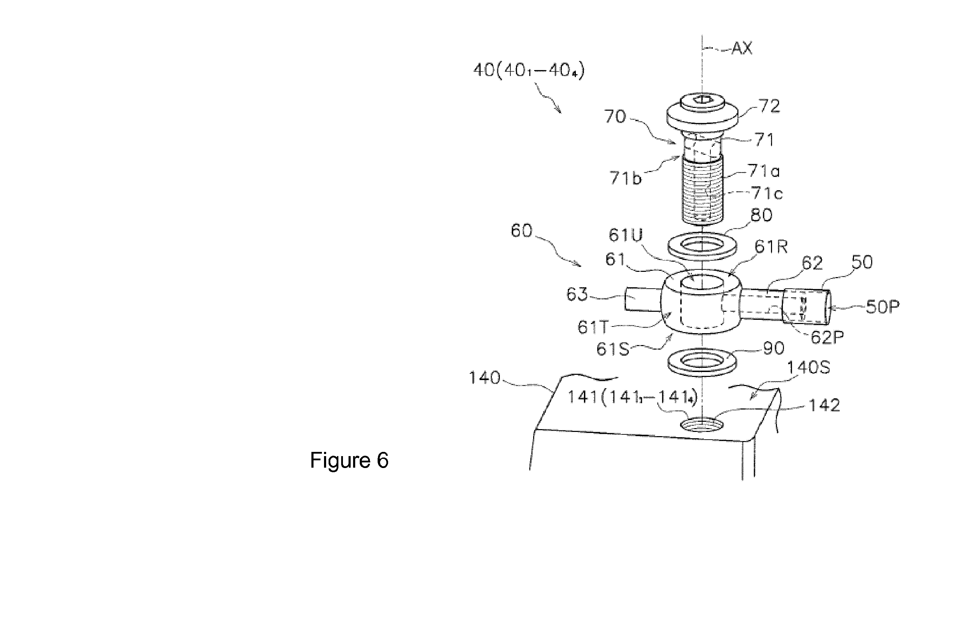

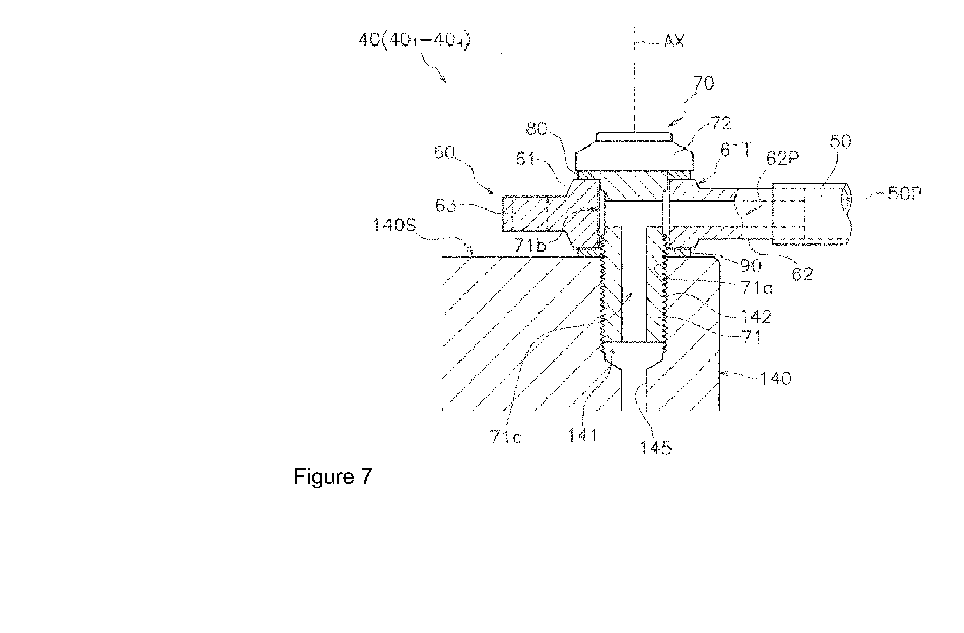

Next, explanation will be made for a structure of brake hoses with reference to the drawings. Figure 4 is a top view of the fluid pressure control device 100 to which the brake hoses are connected. Figure 5 is a top view of the fluid pressure control device 100 from which the brake hoses are disconnected. Figure 6 is an exploded perspective view of each of the brake hoses 40 (40₁ to 40₄). Figure 7 is a cross-sectional view of each of the brake hoses 40 (40₁ to 40₄).

As illustrated in FIGURES. 4 and 5, the fluid pressure control device 100 is composed of a brake hose connecting unit 140, a motor unit 150 and a control unit 160.

As illustrated in Figure 5, the brake hose connecting unit 140 includes first to fourth screw holes 141 (141₁ to 141₄) and first to fourth internal flow paths 145 to 148.

The first to fourth screw holes 141₁ to 141₄ are bored in the upper surface (140S, exemplary surface) of the brake hose connecting unit 140, while being separated away from each other at intervals. A female threaded portion 142 (see FIGURES. 6 and 7) is formed on the inner peripheral surface of each of the first to fourth screw holes 141₁ to 141₄. The first brake hose 40₁ is fixed to the first screw hole 141₁. The second brake hose 40₂ is fixed to the second screw hole 141₂. The third brake hose 40₃ is fixed to the third screw hole 141₃. The fourth brake hose 40₄ is fixed to the fourth screw hole 141₄.

The first to fourth internal flow paths 145 to 148 are respectively communicated with the first to fourth screw holes 141₁ to 141₄. Although not illustrated in the drawings, the first internal flow path 145 is communicated with the third internal flow path 147, whereas the second internal flow path 146 is communicated with the fourth internal flow path 148.

The motor unit 150 is connected to the brake hose connecting unit 140. The motor unit 150 is configured to drive a pump for sucking the brake fluid from a reservoir tank disposed within the brake hose connecting unit 140. The control unit 160 is connected to the brake hose connecting unit 140. The control unit 160 is configured to control the motor unit 150 based on rotation of the front wheel 7 and that of the rear wheel 11 so as to vary the fluid pressures within the first to fourth internal flow paths 145 to 148.

As illustrated in Figure 4, the first brake hose 40₁ includes a first hose main body 50₁, a first fitting 60₁, a first bolt 70₁, a bolt seal member 80 and a device seal member 90. The bolt 70₁ is an example of a rotatable fixing member according to the present invention.

The first hose main body 50₁ has a tubular shape and contains a flow path 50P (see FIGURES. 6 and 7) for the brake fluid in the inside thereof. The first hose main body 50₁ is coupled to the first fitting 60₁ and the front wheel master cylinder 5. In the present exemplary embodiment, the first hose main body 50₁ is extended from the first fitting 60₁ in an obliquely front left direction. The first hose main body 50₁ is made of rubber or metal mesh.

The first fitting 60₁ is fixed to the brake hose connecting unit 140 of the fluid pressure control device 100 by means of the first bolt 70₁. As illustrated in FIGURES. 4, 6 and 7, the first fitting 60₁ has a first insertion-through part 61₁, a first attachment tube part 62₁ and a first protruded part 63₁.

The first insertion-through part 61₁ has an annular shape. The first insertion-through part 61₁ has an upper surface 61R, a lower surface 61S, a first lateral surface 61T₁ and a first insertion-through hole 61U₁. The first lateral surface 61T₁ is continued to the upper surface 61R and the lower surface 61S. The first insertion-through hole 61U₁ penetrates through the first insertion-through part 61₁ from the upper surface 61R to the lower surface 61 S. The first bolt 70₁ is inserted through the first insertion-through hole 61U₁. The first attachment tube part 62₁ has a tubular shape and contains a flow path 62P for the brake fluid in the inside thereof. The flow path 62P is communicated with the first insertion-through hole 61U₁ of the first insertion-through part 61₁. The first attachment tube part 62₁ protrudes from the first lateral surface 61T₁, while being connected to the first insertion-through part 61₁. The first hose main body 50₁ is coupled to the tip end of the first attachment tube part 62₁. The first protruded part 63₁ has a rod shape. The first protruded part 63₁ protrudes from the first lateral surface 61T₁, while being connected to the first insertion-through part 61₁. The first protruded part 63₁ is connected to the first insertion-through part 61₁ in a position shifted about a first axis AX₁ of the first bolt 70₁ at an angle of roughly 180 degrees from the first attachment tube part 62₁. Therefore, the first attachment tube part 62₁ and the first protruded part 63₁ extend in opposite directions. The position of the first attachment tube part 62₁ is predetermined. When the first fitting 60₁ is fixed to the brake hose connecting unit 140, the first attachment tube part 62₁ is set to be directed to the vehicle front side in which the front wheel master cylinder 5 is disposed, while being set not to interfere with its surrounding members such as a third attachment tube part 62₃ of a third fitting 60₃ and a third hose main body 50₃.

The first bolt 70₁ is screwed into the first screw hole 141₁ of the brake hose connecting unit 140, while being inserted through the first insertion-through hole 61U₁ of the first insertion-through part 61₁. Accordingly, the first bolt 70₁ fixes the first fitting 60₁ to the brake hose connecting unit 140. The first bolt 70₁ has a shaft part 71 and a flange part 72. The shaft part 71 has a male threaded portion 71a, an outer peripheral flow path 71b formed thereon, and an internal flow path 71c formed therein. The male threaded portion 71a is formed on the outer peripheral surface of the shaft part 71. The male threaded portion 71a is screwed into the female threaded portion 142 of the first screw hole 141₁. The tightening direction of the male threaded portion 71a is the clockwise direction in a plan view (see Figure 4). The outer peripheral flow path 71b is an annular recessed portion formed on the outer peripheral surface of a portion of the shaft part 71 along the entire circumference about the first axis AX₁ of the first bolt 70₁. The internal flow path 71c is composed of two flow path portions. One flow path portion radially penetrates through the outer peripheral flow path 71b, whereas the other flow path portion extends from the radially penetrating flow path portion to the opening on the tip end of the shaft part 71. The outer peripheral flow path 71b and the first internal flow path 145 of the brake hose connecting unit 140 are in communication with each other through the internal flow path 71c.

The bolt seal member 80 is interposed between the flange part 72 of the first bolt 70₁ and the first insertion-through part 61₁ of the first fitting 60₁. The device seal member 90 is interposed between the brake hose connecting unit 140 and the first insertion-through part 61₁ of the first fitting 60₁.

The second brake hose 40₂ has a structure similar to that of the first brake hose 40₁. As illustrated in Figure 4, the second brake hose 40₂ has a second hose main body 50₂, a second fitting 60₂ and a second bolt 70₂. In the present exemplary embodiment, the second hose main body 50₂ extends from the second fitting 60₂ in an obliquely rear left direction. The second fitting 60₂ has a second insertion-through part 61₂, a second attachment tube part 62₂ and a second protruded part 63₂. The second protruded part 63₂ is connected to the second insertion-through part 61₂ in a position shifted about a second axis AX₂ of the second bolt 70₂ at an angle of roughly 90 degrees from the second attachment tube part 62₂. The position of the second attachment tube part 62₂ is predetermined. When the second fitting 60₂ is fixed to the brake hose connecting unit 140, the second attachment tube part 62₂ is set to be directed to the vehicle rear side in which the rear wheel master cylinder 10 is disposed, while being set not to interfere with its surrounding members such as a fourth attachment tube part 62₄ of a fourth fitting 60₄ and a fourth hose main body 50₄.

The third brake hose 40₃ has a structure similar to that of the first brake hose 40₁. As illustrated in Figure 4, the third brake hose 40₃ includes the third hose main body 50₃, the third fitting 60₃ and a third bolt 70₃. In the present exemplary embodiment, the third hose main body 50₃ extends from the third fitting 60₃ in the obliquely front left direction that is the extending direction of the first hose main body 50₁. The third fitting 60₃ has a third insertion-through part 61₃, the third attachment tube part 62₃ and a third protruded part 63₃. The third protruded part 63₃ is connected to the third insertion-through part 61₃ in a position shifted about a third axis AX₃ of the third bolt 70₃ at an angle of roughly 150 degrees from the third attachment tube part 62₃. The position of the third attachment tube part 62₃ is predetermined. When the third fitting 60₃ is fixed to the brake hose connecting unit 140, the third attachment tube part 62₃ is set to be directed to the vehicle front side in which the front wheel brake caliper 8b is disposed, while being set not to interfere with its surrounding members such as the first attachment tube part 62₁ of the first fitting 60₁ and the first hose main body 50₁.

The fourth brake hose 40₄ has a structure similar to that of the first brake hose 40₁. As illustrated in Figure 4, the fourth brake hose 40₄ includes the fourth hose main body 50₄, the fourth fitting 60₄ and a fourth bolt 70₄. In the present exemplary embodiment, the fourth hose main body 50₄ extends from the fourth fitting 60₄ in the obliquely rear left direction that is the extending direction of the second hose main body 50₂. The fourth fitting 60₄ has a fourth insertion-through part 61₄, the fourth attachment tube part 62₄ and a fourth protruded part 63₄. The fourth protruded part 63₄ is connected to the fourth insertion-through part 61₄ in a position shifted about a fourth axis AX₄ of the fourth bolt 70₄ at an angle of roughly 90 degrees from the fourth attachment tube part 62₄. The position of the fourth attachment tube part 62₄ is predetermined. When the fourth fitting 60₄ is fixed to the brake hose connecting unit 140, the fourth attachment tube part 62₄ is set to be directed to the vehicle rear side in which the rear wheel brake caliper 12b is disposed, while being set not to interfere with its surrounding members such as the second attachment tube part 62₂ of the second fitting 60₂ and the second hose main body 50₂.

As illustrated in Figure 4, the first protruded part 63₁ of the first fitting 60₁ of the first brake hose 40₁ is configured to contact the second fitting 60₂ of the second brake hose 40₂. In the present exemplary embodiment, the first protruded part 63₁ contacts a second lateral surface 61T₂ of the second insertion-through part 61₂ of the second fitting 60₂. The first protruded part 63₁ protrudes on the left side of a direction (depicted with an arrow in Figure 4) directed from the first axis AX₁ of the first bolt 70₁ to the second axis AX₂ of the second bolt 70₂. Regarding the first fitting 60₁, the positional relationship between the first protruded part 63₁ and the first attachment tube part 62₁ is determined such that the first attachment tube part 62₁ is located in the position determined as described above when the first protruded part 63₁ contacts the second lateral surface 61T₂.

The second protruded part 63₂ of the second fitting 60₂ of the second brake hose 40₂ is configured to contact the first fitting 60₁. In the present exemplary embodiment, the second protruded part 63₂ contacts the first lateral surface 61T₁ of the first insertion-through part 61₁ of the first fitting 60₁. The second protruded part 63₂ is protruded on the left side of a direction directed from the second axis AX₂ of the second bolt 70₂ to the first axis AX₁ of the first bolt 70₁. Regarding the second fitting 60₂, the positional relationship between the second protruded part 63₂ and the second attachment tube part 62₂ is determined such that the second attachment tube part 62₂ is located in the position as determined above when the second protruded part 63₂ contacts the first lateral surface 61T₁.

The third protruded part 63₃ of the third fitting 60₃ of the third brake hose 40₃ is configured to contact the first fitting 60₁ of the first brake hose 40₁. In the present exemplary embodiment, the third protruded part 63₃ contacts the first lateral surface 61T₁ of the first insertion-through part 61₁ of the first fitting 60₁. The third protruded part 63₃ protrudes on the left side of a direction directed from the third axis AX₃ of the third bolt 70₃ to the first axis AX₁ of the first bolt 70₁. Regarding the third fitting 60₃, the positional relationship between the third protruded part 63₃ and the third attachment tube part 62₃ is determined such that the third attachment tube part 62₃ is located in the position as determined above when the third protruded part 63₃ contacts the first lateral surface 61T₁.

The fourth protruded part 63₄ of the fourth fitting 60₄ of the fourth brake hose 40₄ is configured to contact the second fitting 60₂ of the second brake hose 40₂. In the present exemplary embodiment, the fourth protruded part 63₄ contacts the second lateral surface 61T₂ of the second insertion-through part 61₂ of the second fitting 60₂. The fourth protruded part 63₄ protrudes on the left side of a direction directed from the fourth axis AX₄ of the fourth bolt 70₄ to the second axis AX₂ of the second bolt 70₂. Regarding the fourth fitting 60₄, the positional relationship between the fourth protruded part 63₄ and the fourth attachment tube part 62₄ is determined such that the fourth attachment tube part 62₄ is located in the position as determined above when the fourth protruded part 63₄ contacts the second lateral surface 61T₂.

Next, with reference to Figure 4, explanation will be made for positional relationships among the first to fourth fittings 60₁ to 60₄.

The protruded length (L1) of the first protruded part 63₁ is greater than the interval (L2) produced between the first insertion-through part 61₁ and the second insertion-through part 61₂. The protruded length L1 of the first protruded part 63₁ is less than the outer diameter (L3) of the first insertion-through part 61₁. The interval L2 produced between the first insertion-through part 61₁ and the second insertion-through part 61₂ is less than the outer diameter L3 of the first insertion-through part 61₁. In other words, the following relationship is established: the interval L2 < the protruded length L1 < the outer diameter L3.

Although not illustrated in the drawings, the protruded length of the second protruded part 63₂ is greater than the interval L2 produced between the first insertion-through part 61₁ and the second insertion-through part 61₂. The protruded length of the second protruded part 63₂ is less than the outer diameter of the second insertion-through part 61₂. The interval L2 produced between the first insertion-through part 61₁ and the second insertion-through part 61₂ is less than the outer diameter of the second insertion-through part 61₂.

The protruded length of the third protruded part 63₃ is greater than the interval produced between the first insertion-through part 61₁ and the third insertion-through part 61₃. The protruded length of the third protruded part 63₃ is less than the outer diameter of the third insertion-through part 61₃. The interval produced between the first insertion-through part 61₁ and the third insertion-through part 61₃ is less than the outer diameter of the third insertion-through part 61₃.

The protruded length of the fourth protruded part 63₄ is greater than the interval produced between the second insertion-through part 61₂ and the fourth insertion-through part 61₄. The protruded length of the fourth protruded part 63₄ is less than the outer diameter of the fourth insertion-through part 61₄. The interval produced between the second insertion-through part 61₂ and the fourth insertion-through part 61₄ is less than the outer diameter of the fourth insertion-through part 61₄.

The first to fourth fittings 60₁ to 60₄ are disposed such that a trapezoidal contour is formed by connecting the first to fourth axes AX₁ to AX₄.

The third bolt 70₃ and the fourth bolt 70₄ are disposed so as to be line symmetric to each other with respect to a bisector P of a line segment connecting the first axis AX₁ of the first bolt 70₁ and the second axis AX₂ of the second bolt 70₂. The interval produced between the third bolt 70₃ and the fourth bolt 70₄ is set to be greater than that produced between the first bolt 70₁ and the second bolt 70₂. The interval produced between the third insertion-through part 61₃ of the third fitting 60₃ and the fourth insertion-through part 61₄ of the fourth fitting 60₄ is greater than the interval L2 produced between the first insertion-through part 61₁ of the first fitting 60, and the second insertion-through part 61₂ of the second fitting 60₂.

A first connecting line CL1 is a line linearly connecting the first axis AX₁ of the first bolt 70₁ and the third axis AX₃ of the third bolt 70₃. On the other hand, a second connecting line CL2 is a line linearly connecting the second axis AX₂ of the second bolt 70₂ and the fourth axis AX₄ of the fourth bolt 70₄. The first connecting line CL1 intersects with the second connecting line CL2. The first connecting line CL1 and the second connecting line CL2 form an acute angle α.

A third connecting line CL3 is a line linearly connecting the first axis AX₁ of the first bolt 70₁ and the second axis AX₂ of the second bolt 70₂. On the other hand, a fourth connecting line CL4 is a line linearly connecting the third axis AX₃ of the third bolt 70₃ and the fourth axis AX₄ of the fourth bolt 70₄. The third connecting line CL3 is arranged roughly in parallel to the fourth connecting line CL4.

Next, explanation will be made for a procedure of assembling the first to fourth fittings 60₁ to 60₄.

Firstly, the first fitting 60₁ is disposed on the upper surface 140S of the brake hose connecting unit 140 such that the first insertion-through hole 61U₁ of the first insertion-through part 61₁ is overlapped with the first screw hole 141₁ of the brake hose connecting unit 140. At this time, the first protruded part 63₁ is preliminarily directed in the direction depicted in Figure 4. Subsequently, the first bolt 70₁ is inserted into the first screw hole 141₁ from the first insertion-through hole 61U₁.

Next, the second fitting 60₂ is disposed on the upper surface 140S of the brake hose connecting unit 140 such that a second insertion-through hole 61U₂ of the second insertion-through part 61₂ is overlapped with the second screw hole 141₂ of the brake hose connecting unit 140. At this time, the second protruded part 63₂ is preliminarily directed in the direction depicted in Figure 4. Subsequently, the second bolt 70₂ is inserted into the second screw hole 141₂ from the second insertion-through hole 61U₂.

Next, the first fitting 60₁ is fixed by screwing the first bolt 70₁ therein in the clockwise direction. At this time, the first fitting 60₁ is co-rotated with the first bolt 70₁ in the clockwise direction. The co-rotation of the first fitting 60₁ is stopped when the first protruded part 63₁ contacts the second lateral surface 61T₂ of the second insertion-through part 61₂.

Next, the second fitting 60₂ is fixed by screwing the second bolt 70₂ therein in the clockwise direction. At this time, the second fitting 60₂ is co-rotated with the second bolt 70₂ in the clockwise direction. The co-rotation of the second fitting 60₂ is stopped when the second protruded part 63₂ contacts the first lateral surface 61T₁ of the first insertion-through part 61₁.

Next, the third fitting 60₃ is disposed on the upper surface 140S of the brake hose connecting unit 140 such that a third insertion-through hole 61U₃ of the third insertion-through part 61₃ is overlapped with the third screw hole 141₃ of the brake hose connecting unit 140. At this time, the third protruded part 63₃ is preliminarily directed in the direction depicted in Figure 4.

Next, the third fitting 60₃ is fixed by inserting the third bolt 70₃ into the third screw hole 141₃ from the third insertion-through hole 61U₃ and screwing the inserted third bolt 70₃ therein in the clockwise direction. At this time, the third fitting 60₃ is co-rotated with the third bolt 70₃ in the clockwise direction. The co-rotation of the third fitting 60₃ is stopped when the third protruded part 63₃ contacts the first lateral surface 61T₁ of the first insertion-through part 61₁.

Next, the fourth fitting 60₄ is disposed on the upper surface 140S of the brake hose connecting unit 140 such that a fourth insertion-through hole 61U₄ of the fourth insertion-through part 61₄ is overlapped with the fourth screw hole 141₄ of the brake hose connecting unit 140. At this time, the fourth protruded part 63₄ is preliminarily directed in the direction depicted in Figure 4.

Next, the fourth fitting 60₄ is fixed by inserting the fourth bolt 70₄ into the fourth screw hole 141₄ from the fourth insertion-through hole 61U₄ and screwing the fourth bolt 70₄ therein in the clockwise direction. At this time, the fourth fitting 60₄ is co-rotated with the fourth bolt 70₄ in the clockwise direction. The co-rotation of the fourth fitting 60₄ is stopped when the fourth protruded part 63₄ contacts to the second lateral surface 61T₂ of the second insertion-through part 61₂.

In the present exemplary embodiment, the first protruded part 63₁ of the first fitting 60₁ of the first brake hose 40₁ contacts the second fitting 60₂ of the second brake hose 40₂. Therefore, even when the first fitting 60₁ is co-rotated with the first bolt 70₁ in fixing the first fitting 60₁ by screwing the first bolt 70₁ into the first screw hole 141₁ of the brake hose connecting unit 140 of the fluid pressure control device 100, the co-rotation of the first fitting 60₁ can be stopped in the position in which the first protruded part 63₁ makes contact with the second fitting 60₂. Accordingly, the first fitting 60₁ can be inhibited from being co-rotated with the first bolt 70₁ without using any components other than the first and second brake hoses 40₁ and 40₂. Consequently, it is possible to suppress an increase in a number of components, weight, and/or size of the fluid pressure control device 100.

Further, the positional relationship between the first protruded part 63₁ and the first attachment tube part 62₁ is predetermined such that the first attachment tube part 62₁ is located in the position determined as described above when the first protruded part 63₁ of the first fitting 60₁ makes contact with the second lateral surface 61T₂ of the second fitting 60₂. With such configuration, the first attachment tube part 62₁ and the first brake hose 40₁ can be positioned only by causing the first protruded part 63₁ to make contact with the second lateral surface 61T₂ of the second fitting 60₂.

The first protruded part 63₁ of the first fitting 60₁ of the first brake hose 40₁ contacts the second lateral surface 61T₂ of the second insertion-through part 61₂ of the second fitting 60₂. Therefore, even when the first fitting 60₁ is co-rotated with the first bolt 70₁, the co-rotation of the first fitting 60, can be stopped in the position in which the first protruded part 63₁ makes contact with the second lateral surface 61T₂ of the second insertion-through part 61₂. Accordingly, it is possible to extend the region to which the first protruded part 63₁ is contacted when the first protruded part 63₁ is contacted to the second lateral surface 61T₂ of the second insertion-through part 61₂ of the second fitting 60₂ compared to an arrangement in which the first protruded part 63₁ is contacted to the surface of the second attachment tube part 62₂ or that of the second protruded part 63₂. As a result, in predetermining the contact part of the second fitting 60₂, i.e., the part to which the first protruded part 63₁ is contacted, it is possible to extend a region allowed to be set as the contact part. The first protruded part 63₁ can be thereby easily contacted to the second fitting 60₂. Further, the second lateral surface 61T₂ has an annular shape. Therefore, the first attachment tube part 62₁ can be set in a predetermined position regardless of which portion of the second fitting 60₂ the first protruded part 63₁ is contacted to. Accordingly, the first attachment tube part 62₁ can be easily set in the predetermined position. Workability and assembling performance can be thereby enhanced.

The second protruded part 63₂ of the second fitting 60₂ is contacts the first fitting 60₁. Therefore, even when the second fitting 60₂ is co-rotated with the second bolt 70₂ in fixing the second fitting 60₂ by screwing the second bolt 70₂ into the second screw hole 141₂ of the brake hose connecting unit 140 of the fluid pressure control device 100, the co-rotation of the second fitting 60₂ can be stopped in the position in which the second protruded part 63₂ makes contact with the first fitting 60₁. Accordingly, the second fitting 60₂ can be inhibited from being co-rotated with the second bolt 70₂ without using any components other than the first and second brake hoses 40₁ and 40₂. Consequently, it is possible to further suppress an increase in a number of components, weight, and/or size of the fluid pressure control device 100. Further, when the positional relationship between the second attachment tube part 62₂ and the second protruded part 63₂ in the second fitting 60₂ is predetermined while the second protruded part 63₂ is predetermined to make contact with a predetermined part of the first fitting 60₁, the second attachment tube part 62₂ and the second brake hose 40₂ can be positioned only by causing the second protruded part 63₂ to make contact with the predetermined part of the first fitting 60₁.

The second protruded part 63₂ contacts the first lateral surface 61T₁ of the first insertion-through part 61₁ of the first fitting 60₁. Therefore, even when the second fitting 60₂ is co-rotated with the second bolt 70₂, the co-rotation of the second fitting 60₂ can be stopped in the position in which the second protruded part 63₂ makes contact with the first lateral surface 61T₁ of the first insertion-through part 61₁. Accordingly, it is possible to extend the region to which the second protruded part 63₂ is contacted when the second protruded part 63₂ is contacted to the first lateral surface 61T₁ of the first insertion-through part 61₁ in comparison with an arrangement in which the second protruded part 63₂ is contacted to the surface of the first attachment tube part 62₁. As a result, in predetermining the contact part of the first fitting 60₁, i.e., the part to which the second protruded part 63₂ is contacted, it is possible to extend a region allowed to be set as the contact part. The second protruded part 63₂ can be thereby easily contacted to the first fitting 60₁.

The first protruded part 63₁ protrudes on the left side of the direction (depicted with the arrow in Figure 4) directed from the first axis AX₁ of the first bolt 70₁ to the second axis AX₂ of the second bolt 70₂. Therefore, in fixing the first fitting 60₁ by screwing the first bolt 70₁ into the first screw hole 141₁ of the brake hose connecting unit 140 of the fluid pressure control device 100, the first protruded part 63₁ is contacted to the second fitting 60₂ from the left side when the first bolt 70₁ is tightened in the clockwise direction and the first fitting 60₁ is co-rotated therewith in the clockwise direction. Therefore, the first protruded part 63₁ can be more easily contacted to the second fitting 60₂ in comparison with a structure in which the first protruded part 63₁ protrudes on the right side of the direction directed from the first axisAX₁ to the second axis AX₂.

The protruded length L1 of the first protruded part 63₁ is greater than the interval L2 produced between the first insertion-through part 61₁ and the second insertion-through part 61₂. Therefore, even when the first fitting 60₁ is co-rotated with the first bolt 70₁, the first protruded part 63₁ can be reliably contacted to the second lateral surface 61T₂ of the second insertion-through part 61₂.

The interval L2 produced between the first insertion-through part 61₁ and the second insertion-through part 61₂ is less than the outer diameter L3 of the first insertion-through part 61₁. Therefore, the first fitting 60, and the second fitting 60₂ can be disposed sufficiently close to each other. In other words, the first fitting 60₁ and the second fitting 60₂ can be compactly disposed. Consequently, it is possible to further suppress increase in size of the fluid pressure control device 100.

The third protruded part 63₃ of the third fitting 60₃ of the third brake hose 40₃ is configured to contact the first fitting 60₁ of the first brake hose 40₁. Therefore, even when the third fitting 60₃ is co-rotated with the third bolt 70₃ in fixing the third fitting 60₃ by screwing the third bolt 70₃ into the third screw hole 141₃ of the brake hose connecting unit 140 of the fluid pressure control device 100, the co-rotation of the third fitting 60₃ can be stopped in the position in which the third protruded part 63₃ makes contact with the first fitting 60₁. Accordingly, the third fitting 60₃ can be inhibited from being co-rotated with the third bolt 70₃ without using any components other than the first and third brake hoses 40₁ and 40₃. Consequently, it is possible to further suppress an increase in a number of components, weight, and/or size of the fluid pressure control device 100. Further, when the positional relationship between the third protruded part 63₃ and the third attachment tube part 62₃ in the third fitting 60₃ is predetermined while the third protruded part 63₃ is predetermined to make contact with a predetermined part of the first fitting 60₁, the third attachment tube part 62₃ and the third brake hose 40₃ can be positioned only by causing the third protruded part 63₃ to make contact with the predetermined part of the first fitting 60₁.

The fourth protruded part 63₄ of the fourth fitting 60₄ of the fourth brake hose 40₄ is configured to contact the second fitting 60₂ of the second brake hose 40₂. Therefore, even when the fourth fitting 60₄ is co-rotated with the fourth bolt 70₄ in fixing the fourth fitting 60₄ by screwing the fourth bolt 70₄ into the fourth screw hole 141₄ of the brake hose connecting unit 140 of the fluid pressure control device 100, the co-rotation of the fourth fitting 60₄ can be stopped in the position that the fourth protruded part 63₄ makes contact with the second fitting 60₂. Accordingly, the fourth fitting 60₄ can be inhibited from being co-rotated with the fourth bolt 70₄ without using any components other than the second and fourth brake hoses 40₂ and 40₄. Consequently it is possible to further suppress an increase in a number of components, weight, and/or size of the fluid pressure control device 100. Further, when the positional relationship between the fourth protruded part 63₄ and the fourth attachment tube part 62₄ in the fourth fitting 60₄ is predetermined while the fourth protruded part 63₄ is predetermined to make contact with a predetermined part of the second fitting 60₂, the fourth attachment tube part 62₄ and the fourth brake hose 40₄ can be positioned only by causing the fourth protruded part 63₄ to make contact with the predetermined part of the second fitting 60₂.

The third bolt 70₃ and the fourth bolt 70₄ are disposed so as to be line symmetric to each other with reference to the bisector P of the line segment connecting the first axis AX₁ of the first bolt 70₁ and the second axis AX₂ of the second bolt 70₂. The interval between the third bolt 70₃ and the fourth bolt 70₄ is set to be greater than that between the first bolt 70₁ and the second bolt 70₂. Therefore, the third bolt 70₃ and the fourth bolt 70₄ can be separated away from each other with reference to the bisector P. Accordingly, the third insertion-through part 61₃ and the fourth insertion-through part 61₄ can be inhibited from interfering with each other. Further, due to the interval between the third bolt 70₃ and the fourth bolt 70₄ being greater than that between the first bolt 70₁ and the second bolt 70₂, the first bolt 70₁ and the third bolt 70₃ can be herein inhibited from interfering with each other while the second bolt 70₂ and the fourth bolt 70₄ can be inhibited from interfering with each other in comparison with an arrangement in which the interval between the third bolt 70₃ and the fourth bolt 70₄ is equivalent to that between the first bolt 70₁ and the second bolt 70₂.

The first connecting line CL1 linearly connecting the first axis AX₁ of the first bolt 70₁ and the third axis AX₃ of the third bolt 70₃ intersects with the second connecting line CL2 linearly connecting the second axis AX₂ of the second bolt 70₂ and the fourth axis AX₄ of the fourth bolt 70₄. Therefore, the first to fourth fittings 60₁ to 60₄ are disposed in a V-shape. Accordingly, the first brake hose 40₁ and the third brake hose 40₃ can be easily directed in the same direction (to the forward in the present exemplary embodiment), while the second brake hose 40₂ and the fourth brake hose 40₄ can be easily directed in the same direction (to the rearward in the present exemplary embodiment). Further, the first to fourth fittings 60₁ to 60₄ can be compactly disposed in a direction arranged in parallel to the line connecting the first axis AX₁ and the second axis AX2 in comparison with an arrangement in which the first to fourth fittings 60₁ to 60₄ are disposed on a straight line. Yet further, the first to fourth fittings 60₁ to 60₄ can be compactly disposed in a direction arranged perpendicularly to the line connecting the first axis AX₁ and the second axis AX₂ in comparison with an arrangement in which the first to fourth fittings 60₁ to 60₄ are disposed in a rectangular shape.

The first connecting line CL1 and the second connecting line CL2 form the acute angle α. Therefore, the interval between the third fitting 60₃ and the fourth fitting 60₄ can be further reduced in comparison with an arrangement in which the first connecting line CL1 and the second connecting line CL2 form an obtuse angle. Accordingly, the first to fourth fittings 60, to 60₄ can be compactly disposed, while being disposed closely to each other.

The first fitting 60₁ has the flow path 62P produced in the first attachment tube part 62₁. The first bolt 70₁ has the outer peripheral flow path 71b formed on the shaft part 71 and the internal flow path 71c formed in the shaft part 71. The flow path 62P, the outer peripheral flow path 71b and the internal flow path 71c compose a first communication flow path communicated with the first internal flow path 145 of the brake hose connecting unit 140. Although not illustrated in the drawings, a second communication flow path, having the same structure as the first communication flow path, is similarly produced inside the second fitting 60₂ and the second bolt 70₂. Therefore, the first and second brake hoses 40₁ and 40₂ can be reduced in their sizes in comparison with a structure in which the communication flow path is produced outside the fitting and the bolt.

The present invention has been described with the aforementioned exemplary embodiment. However, it should be understood that the present invention is not limited by the description and the drawings, which form a part of this disclosure. A variety of alternative exemplary embodiments, practical examples and operational techniques would be apparent for a person skilled in the art from this disclosure.

In the aforementioned exemplary embodiment, the fluid pressure control device 100 is designed to be disposed on the right side of the main pipe 22. However, it is possible to arbitrarily change the disposed position of the fluid pressure control device 100.

In the aforementioned exemplary embodiment, the brake fluid pressure control unit 30 is designed to include the first to fourth brake hoses 40₁ to 40₄. However, the number of brake hoses included in the brake fluid pressure control unit 30 is not particularly limited as long as it is plural. For example, the brake fluid pressure control unit 30 may include only the two brake hoses 40₁ and 40₃ for the front wheel brake, or alternatively, may include only the two brake hoses 40₂ and 40₄ for the rear wheel brake. Yet alternatively, the brake fluid pressure control unit 30 may include five or more brake hoses.

In the aforementioned exemplary embodiment, the first to fourth insertion-through parts 61₁ to 61₄ of the first to fourth fittings 60₁ to 60₄ are designed to be beneficially disposed in a V-shape as illustrated in Figure 4. However, the positions of the first to fourth insertion-through parts 61₁ to 61₄ may be arbitrarily changed. Therefore, the first connecting line CL1 and the second connecting line CL2 may form an obtuse angle. Alternatively, the first and second connecting lines CL1 and CL2 may be arranged either on a straight line or in parallel to each other.

In the aforementioned exemplary embodiment, the first to fourth brake hoses 40₁ to 40₄ are designed to be connected to the upper surface 140S of the brake hose connecting unit 140 in the fluid pressure control device 100. However, the first to fourth brake hoses 40₁ to 40₄ may be connected to a lateral surface or a bottom surface of the brake hose connecting unit 140. Further, stepped portions may be formed among the first to fourth fittings 60₁ to 60₄.

In the aforementioned exemplary embodiment, the first protruded part 63₁ is designed to be protruded oppositely to the first attachment tube part 62₁ in the first fitting 60₁ of the first brake hose 40₁. However, the positional relationship between the first protruded part 63₁ and the first attachment tube part 62₁ may be arbitrarily changed. This also applies to the second to fourth fittings 60₂ to 60₄.

In the aforementioned exemplary embodiment, the motorcycle has been explained as an example of a saddle-ride type vehicle. However, the saddle-ride type vehicle includes a vehicle equipped with three or more wheels such as an all-terrain vehicle, a snow mobile and so forth. Further, the motorcycle includes an off-road motorcycle, an on-road motorcycle, a moped as well as a scooter.

In the aforementioned exemplary embodiment, all the first to fourth fittings 60₁ to 60₄ are designed to be provided with the protruded parts (the first to fourth protruded parts 63₁ to 63₄). However, when any one of the first to fourth fittings 60₁ to 60₄ is provided with the protruded part, co-rotation of the relevant fitting can be inhibited. Further, the positions of the first to fourth fittings 60₁ to 60₄ and the connection destinations thereof (i.e., the front wheel brake lever 4a, the rear wheel brake pedal 26a, the front wheel master cylinder 5 and the rear wheel master cylinder 10) can be arbitrarily changed in accordance with a vehicle.

Thus, it is apparent that the present invention encompasses a variety of exemplary embodiments and so forth that are not described in this disclosure. Therefore, the technical scope of the present invention should be defined only by the appended claims, which are valid on the basis of the aforementioned explanation.

According to the present invention, it is possible to suppress an increase in anumber of components, weight, and/or increase in size of a fluid pressure control device. Hence, the present invention is useful in the field of saddle-ride type vehicles.

### Reference signs list:

- 1: Saddle-ride type vehicle or straddle-type vehicle such as a motorcycle
- 2: Frame
- 3: Steering shaft
- 4: Steering handle
- 5: Front wheel master cylinder
- 6: Front fork
- 7: Front wheel
- 8: Front wheel brake device
- 9: Swing arm
- 10: Rear wheel master cylinder
- 11: Rear wheel
- 12: Rear wheel brake device
- 13: Engine
- 30: Brake fluid pressure control unit
- 40₁-40₄: First to fourth brake hoses
- 50₁-50₄: First to fourth hose main bodies
- 60₁-60₄: First to fourth fittings
- 61₁-61₄: First to fourth insertion-through parts
- 62₁-62₄: First to fourth attachment tube parts
- 63₁-63₄: First to fourth protruded parts
- 70₁-70₄: First to fourth bolts
- 100: Liquid pressure control device
- 140: Brake hose connecting unit
- 141₁-141₄: First to fourth screw holes
- 145-148: First to fourth internal flow paths
- 150: Motor unit
- 160: Control unit
- AX₁-AX₄: First to forth axes

## Claims

1. A saddle-ride or straddle-type vehicle (1) comprising:
first and second brake hoses (40₁, 40₂) respectively containing a brake fluid; and
a fluid pressure control device (100) including a brake hose connecting unit (140) and being configured to control a fluid pressure of the brake fluid to be transferred to a brake element (8, 12) connected to the brake hose connecting unit (140), the brake hose connecting unit (140) having first and second fixing holes (141₁, 141₂) therein, the first fixing hole (141₁) being connected to the first brake hose (40₁), the second fixing hole (141₂) being connected to the second brake hose (40₂),
the first brake hose (40₁) including a first hose main body (50₁), a first fitting (60₁) and a first rotatable fixing member (70₁), the first fitting (60₁) being coupled to the fluid pressure control device (100), the first rotatable fixing member (70₁) being rotated into the first fixing hole (141₁) so as to fix the first fitting (60₁) to the brake hose connecting unit (140), the second brake hose (40₂) including a second hose main body (50₂), a second fitting (60₂) and a second rotatable fixing member (70₂), the second fitting (60₂) being coupled to the fluid pressure control device (100), the second rotatable fixing member (70₂) being rotated into the second fixing hole (141₂) so as to fix the second fitting (60₂) to the brake hose connecting unit (140),
the first fitting (60₁) having a first insertion-through part (61₁), a first attachment tube part (62₁) and a first protruded part (63₁),
the first insertion-through part (61₁) comprising a first insertion-through hole (61 Uᵢ) through which the first rotatable fixing member (70₁) is inserted;
the first attachment tube part (62₁) being connected to the first insertion-through part (61₁) and being attached to the first hose main body (50₁); and
the first protruded part (63₁) protrudes from or laterally of a first lateral surface (61 Tᵢ) of the first insertion-through part (61₁) ; **characterized in that**;
the first protruded part (63₁) abuts, contacts or is contactable with the second fitting (60₂); wherein
the second fitting (60₂) comprises a second insertion-through part (61₂); and
the first and second insertion-through parts (61₁, 61₂) have an annular shape.

2. The saddle-ride type vehicle (1) as claimed in claim 1, wherein
the second fitting (60₂) has a second attachment tube part (62₂),
the second insertion-through part (61₂) comprises a second insertion-through hole (61 U₂) through which the second rotatable fixing member (70₂) is inserted; and
the second attachment tube part (62₂) is connected to the second insertion-through part (61₂) and is attached to the second hose main body (50₂), and
the first protruded part (63₁) abuts, contacts or is contactable with a second lateral surface (61T₂) of the second insertion-through part (61₂) of the second fitting (60₂).

3. The saddle-ride type vehicle (1) as daimed in claim 2, wherein
the second fitting (60₂) has a second protruded part (63₂) protrudes laterally of the second lateral surface (61T₂) of the second insertion-through part (61₂), and
the second protruded part (63₂) abuts, contacts or is contactable with the first fitting (60₁).

4. The saddle-ride type vehicle (1) as daimed in claim 3, wherein
the second protruded part (63₂) abuts, contacts or is contactable with the first lateral surface (61T₁) of the first fitting (60₁).

5. The saddle-ride type vehicle (1) as daimed in any of claims 1 to 4, wherein
in a plan view of a surface of the brake hose connecting unit (140), the first protruded part (63₁) protrudes on a left side of a direction directed from a first axis (AX₁) of the first rotatable fixing member (70₂) to a second axis (AX₂) of the second rotatable fixing member (70₂).

6. The saddle-ride type vehicle (1) as daimed in claim 2, wherein
in a plan view of a surface of the brake hose connecting unit (140), a protruded length (L1) of the first protruded part (63₁) is greater than an interval (L2) between the first insertion-through part (61₁) and the second insertion-through part (61₂).

7. The saddle-ride type vehicle (1) as daimed in claim 6, wherein
in the plan view of the surface of the brake hose connecting unit (140), the interval (L2) between the first insertion-through part (61₁) and the second insertion-through part (61₂) is less than an outer diameter (L3) of the first insertion-through part (61₁).

8. The saddle-ride type vehicle (1) as daimed in any of claims 1 to 7 further comprising:
a third brake hose (40₃) containing the brake fluid, wherein
the brake hose connecting unit (140) has a third fixing hole (141₃) therein,
the third brake hose (40₃) has a third hose main body (50₃), a third fitting (60₃) and a third rotatable fixing member (70₃), the third fitting (60₃) being coupled to the fluid pressure control device (100), the third rotatable fixing member (70₃) being rotated in the third fixing hole (141₃) of the brake hose connecting unit (140) so as to fix the third fitting (60₃) to the brake hose connecting unit (140),
the third fitting (60₃) has a third insertion-through part (61₃), a third attachment tube part (62₃) and a third protruded part (63₃),
the third insertion-through part (61₃) comprises a third insertion-through hole (61U₃) through which the third rotatable fixing member (70₃) is inserted;
the third attachment tube part (62₃) is connected to the third insertion-through part (61₃) and is attached to the third hose main body (50₃); and
the third protruded part (63₃) protrudes laterally of a third lateral surface (61T₃) of the third insertion-through part (61₃), and
the third protruded part (63₃) abuts, contacts or is contactable with the first fitting (60₁).

9. The saddle-ride type vehicle (1) as daimed in claim 8 further comprising:
a fourth brake hose (40₄) containing the brake fluid, wherein
the brake hose connecting unit (140) has a fourth fixing hole (141₁,) therein,
the fourth brake hose (40₄) has a fourth hose main body (50₄), a fourth fitting (60₄) and a fourth rotatable fixing member (70₄), the fourth fitting (60₄) being coupled to the fluid pressure control device (100), the fourth rotatable fixing member (70₄) being rotated in the fourth fixing hole (141₁,) so as to fix the fourth fitting (60₄) to the brake hose connecting unit (140),
the fourth fitting (60₄) has a fourth insertion-through part (61₄), a fourth attachment tube part (62₄) and a fourth protruded part (63₄),
the fourth insertion-through part (61₄) comprises a fourth insertion-through hole (61U₄) through which the fourth rotatable fixing member (70₄) is inserted;
the fourth attachment tube part (62₄) is connected to the fourth insertion-through part (61₄) and is attached to the fourth hose main body (50₄); and
the fourth protruded part (63₄) protrudes laterally of a fourth lateral surface (61T₄) of the fourth insertion-through part (61₄), and
the fourth protruded part (63₄) abuts, contacts or is contactable with the second fitting (60₂).

10. The saddle-ride type vehicle (1) as daimed in claim 9, wherein
the third rotatable fixing member (70₃) and the fourth rotatable fixing member (70₄) are disposed so as to be line symmetric to each other with reference to a bisector (P) of a line segment (CL3) connecting a first axis (AX1) of the first rotatable fixing member (70₁) and a second axis (AX2) of the second rotatable fixing member (70₂), and
an interval produced between the third rotatable fixing member (70₃) and the fourth rotatable fixing member (70₄) is greater than an interval (L2) produced between the first rotatable fixing member (70₁) and the second rotatable fixing member (70₂).

11. The saddle-ride type vehicle (1) as daimed in claim 10, wherein
a first connecting line (CL1) connecting the first axis (AX1) of the first rotatable fixing member (70₁) and a third axis (AX3) of the third rotatable fixing member (70₃) intersects with a second connecting line (CL2) connecting the second axis (AX2) of the second rotatable fixing member (70₂) and a fourth axis (AX4) of the fourth rotatable fixing member (70₄); and optionally
the first connecting line (CL1) and the second connecting line (CL2) form an acute angle (α).

12. The saddle-ride type vehicle (1) as daimed in any of claims 1 to 11, wherein
the fluid pressure control device (100) includes first and second internal flow paths (145, 146), a first communication flow path and a second communication flow path,
the first and second internal flow paths (145, 146) are produced inside the brake hose connecting unit (140);
the first communication flow path is produced inside the first fitting (60₁) and the first rotatable fixing member (70₁) so as to be communicated with the first internal flow path (145); and
the second communication flow path is produced inside the second fitting (60₂) and the second rotatable fixing member (70₂) so as to be communicated with the second internal flow path (146).

13. The saddle-ride type vehicle (1) as claimed in any of the preceding claims, wherein
one or more of: the third and/or fourth insertion-through parts (61₃, 61₄) have an annular shape; and/or
one or more of: the first, second, third and/or fourth rotatable fixing members (70₁, 70₂, 70₃, 70₄) comprise a bolt; and/or
one or more of: the first, second, third and/or fourth fixing holes (141₁, 141₂, 141₃, 141₄) comprise a screw hole; and/or
one or more of: the first, second, third and/or fourth rotatable fixing members (70₁, 70₂, 70₃, 70₄) are screwed into the respective first, second, third and/or fourth fixing hole (141₁, 141₂, 141₃, 141₄) so as to fix the respective first, second, third and/orfourth fitting (60₁, 60₂, 60₃, 60₄) to the brake hose connecting unit (140).

14. A system comprising:
a first brake hose (40₁);
a second brake hose (40₂); and
a fluid pressure control device (100) for a saddle-ride type vehicle;
the first and second brake hoses (40₁, 40₂) being configured to contain a brake fluid;
the fluid pressure control device (100) including a brake hose connecting unit (140) and being configured to control a fluid pressure of the brake fluid to be transferred to a brake element (8,12) connected or connectable to the brake hose connecting unit (140), the brake hose connecting unit (140) having first and second fixing holes (141 1412) therein, the first fixing hole (141₁) being connected or connectable to the first brake hose (40₁), the second fixing hole (1412) being connected or connectable to the second brake hose (40₂);
the first brake hose (40₁) induding a first hose main body (50₁), a first fitting (60₁) and a first rotatable fixing member (70₁), the first fitting (60₁) being coupled or couplable to the fluid pressure control device (100), the first rotatable fixing member (70₁) being rotated or rotatable into the first fixing hole (141₁) so as to fix the first fitting (60₁) to the brake hose connecting unit (140);
the second brake hose (40₂) includes a second hose main body (50₂), a second fitting (60₂) and a second rotatable fixing member (70₂), the second fitting (60₂) being coupled or couplable to the fluid pressure control device (100), the second rotatable fixing member (70₂) being rotated or rotatable into the second fixing hole (141₂) so as to fix the second fitting (60₂) to the brake hose connecting unit (140);
the first fitting (60₁) comprising a first insertion-through part (61₁), a first attachment tube part (62₁) and a first protruded part (63₁);
the first insertion-through part (61₁) comprising a first insertion-through hole (61 Uᵢ) through which the first rotatable fixing member (70₁) is inserted or insertable;
the first attachment tube part (62₁) being connected to the first insertion-through part (61₁) and being attached or attachable to the first hose main body (50₁);
the first protruded part (63₁) extending from or laterally of a first lateral surface (61 Tᵢ) of the first insertion-through part (61₁);
**characterized in that** the first protruded part (63₁) abuts, contacts or is contactable with the second fitting when the first fitting is fixed to the brake hose connecting unit (60₂); wherein
the second fitting (60₂) comprises a second insertion-through part (61₂); and
the first and second insertion-through parts (61₁, 61₂) have an annular shape.

## Patentansprüche

1. Sattelfahrzeug oder Aufsitzfahrzeug (1), umfassend:
einen ersten und einen zweiten Bremsschlauch (40₁, 40₂), die jeweils eine Bremsflüssigkeit enthalten; und
eine Flüssigkeitsdrucksteuerungsvorrichtung (100), umfassend eine Bremsschlauchanschlusseinheit (140) und konfiguriert zur Steuerung eines Flüssigkeitsdrucks der Bremsflüssigkeit, die zu einem Bremselement (8, 12), das an die Bremsschlauchanschlusseinheit (140) angeschlossen ist, übertragen werden soll, wobei die Bremsschlauchanschlusseinheit (140) ein erstes und ein zweites Fixierungsloch (141₁, 141₉) darin hat, wobei das erste Fixierungsloch (141₁) mit dem ersten Bremsschlauch (40₁) verbunden ist und das zweite Fixierungsloch (141₂) mit dem zweiten Bremsschlauch (40₂) verbunden ist,
wobei der erste Bremsschlauch (40₁) einen ersten Schlauchhauptkörper (50₁), eine erste Befestigung (60₁) und ein erstes drehbares Fixierungselement (70₁) umfasst, wobei die erste Befestigung (60₁) an die Flüssigkeitsdrucksteuerungsvorrichtung (100) gekoppelt wird, das erste drehbare Fixierungselement (70₁) in das erste Fixierungsloch (141₁) gedreht wird, so dass die erste Befestigung (60₁) an der Bremsschlauchanschlusseinheit (140) fixiert wird,
wobei der zweite Bremsschlauch (40₂) einen zweiten Schlauchhauptkörper (50₂), eine zweite Befestigung (60₂) und ein zweites drehbares Fixierungselement (70₂) umfasst, wobei die zweite Befestigung (60₂) an die Flüssigkeitsdrucksteuerungsvorrichtung (100) gekoppelt wird, das zweite drehbare Fixierungselement (70₂) in das zweite Fixierungsloch (141₂) gedreht wird, so dass die zweite Befestigung (60₂) an der Bremsschlauchanschlusseinheit (140) fixiert wird,
wobei die erste Befestigung (60₁) mit einem ersten Einführungsdurchführteil (61₁), einem ersten Befestigungsrohrteil (62₁) und einem ersten hervorstehenden Teil (63₁) versehen ist,
wobei der erste Einführungsdurchführteil (61₁) ein erstes Einführungsdurchführloch (61 Uᵢ), durch das das erste drehbare Fixierungselement (70₁) eingeführt wird, umfasst;
wobei der erste Befestigungsrohrteil (62₁) mit dem ersten Einführungsdurchführteil (61₁) verbunden ist und an dem ersten Schlauchhauptkörper (50₁) befestigt wird; und
wobei der erste hervorstehende Teil (63₁) aus oder seitlich von einer ersten Seitenfläche (61 Tᵢ) des ersten Einführungsdurchführteils (61₁) hervorsteht; **dadurch gekennzeichnet, dass**
der erste hervorstehende Teil (63₁) an die zweite Befestigung (60₂) anstößt, diese kontaktiert oder mit dieser kontaktierbar ist; wobei
die zweite Befestigung (60₂) einen zweiten Einführungsdurchführteil (61₂) umfasst; und
die der erste und der zweite Einführungsdurchführteil (61₁, 61₂) eine Ringform haben.

2. Sattelfahrzeug (1) nach Anspruch 1, wobei
die zweite Befestigung (60₂) einen zweiten Befestigungsrohrteil (62₂) hat,
der zweite Einführungsdurchführteil (61₂) ein zweites Einführungsdurchführloch (61 U₂) umfasst, durch das das zweite drehbare Fixierungselement (70₂) eingeführt wird; und
der zweite Befestigungsrohrteil (62₂) mit dem zweiten Einführungsdurchführteil (61₂) verbunden ist und an dem zweiten Schlauchhauptkörper (50₂) befestigt wird, und
der erste hervorstehende Teil (63₁) an eine zweite Seitenfläche (61T₂) des zweiten Einführungsdurchführteils (61₂) der zweiten Befestigung (60₂) anstößt, diese kontaktiert oder mit dieser kontaktierbar ist.

3. Sattelfahrzeug (1) nach Anspruch 2, wobei
die zweite Befestigung (60₂) einen zweiten hervorstehenden Teil (63₂) hat, der seitlich von der zweiten Seitenfläche (61T₂) des zweiten Einführungsdurchführteils (61₂) hervorsteht, und
der zweite hervorstehende Teil (63₂) an die erste Befestigung (60₁) anstößt, diese kontaktiert oder mit dieser kontaktierbar ist.

4. Sattelfahrzeug (1) nach Anspruch 3, wobei
der zweite hervorstehende Teil (63₂) an die erste Seitenfläche (61T₁) der ersten Befestigung (60₁) anstößt, diese kontaktiert oder mit dieser kontaktierbar ist.

5. Sattelfahrzeug (1) nach einem der Ansprüche 1 bis 4, wobei
in einer Draufsicht einer Oberfläche der Bremsschlauchanschlusseinheit (140) der erste hervorstehende Teil (63₁) an einer linken Seite einer Richtung hervorsteht, die von einer ersten Achse (AX₁) des ersten drehbaren Fixierungselements (70₂) zu einer zweiten Achse (AX₂) des zweiten drehbaren Fixierungselements (70₂) gerichtet ist.

6. Sattelfahrzeug (1) nach Anspruch 2, wobei
in einer Draufsicht einer Oberfläche der Bremsschlauchanschlusseinheit (140) eine hervorstehende Länge (L1) des ersten hervorstehenden Teils (63₁) größer als ein Intervall (L2) zwischen dem ersten Einführungsdurchführteil (61₁) und dem zweiten Einführungsdurchführteil (61₂) ist.

7. Sattelfahrzeug (1) nach Anspruch 6, wobei
in der Draufsicht der Oberfläche der Bremsschlauchanschlusseinheit (140) das Intervall (L2) zwischen dem ersten Einführungsdurchführteil (61₁) und dem zweiten Einführungsdurchführteil (61₂) kleiner als ein Außendurchmesser (L3) des ersten Einführungsdurchführteils (61₁) ist.

8. Sattelfahrzeug (1) nach einem der Ansprüche 1 bis 7, weiterhin umfassend:
einen dritten Bremsschlauch (40₃), der die Bremsflüssigkeit enthält, wobei
die Bremsschlauchanschlusseinheit (140) ein drittes Fixierungsloch (141₃) darin hat,
der dritte Bremsschlauch (40₃) einen dritten Schlauchhauptkörper (50₃), eine dritte Befestigung (60₃) und ein drittes drehbares Fixierungselement (70₃) hat, wobei die dritte Befestigung (60₃) an die Flüssigkeitsdrucksteuerungsvorrichtung (100) gekoppelt ist, das dritte drehbare Fixierungselement (70₃) in dem dritten Fixierungsloch (141₃) der Bremsschlauchanschlusseinheit (140) gedreht wird, so dass die dritte Befestigung (60₃) an der Bremsschlauchanschlusseinheit (140) fixiert wird,
die dritte Befestigung (60₃) einen dritten Einführungsdurchführteil (61₃), einen dritten Befestigungsrohrteil (62₃) und einen dritten hervorstehenden Teil (63₃) hat,
der dritte Einführungsdurchführteil (61₃) ein drittes Einführungsdurchführloch (61U₃) umfasst, durch das das dritte drehbare Fixierungselement (70₃) eingeführt wird;
der dritte Befestigungsrohrteil (62₃) mit dem dritten Einführungsdurchführteil (61₃) verbunden ist und am dritten Schlauchhauptkörper (50₃) befestigt ist; und
der dritte hervorstehende Teil (63₃) seitlich von einer dritten Seitenfläche (61T₃) des dritten Einführungsdurchführteils (61₃) hervorsteht, und
der dritte hervorstehende Teil (63₃) an die erste Befestigung (60₁) anstößt, diese kontaktiert oder mit dieser kontaktierbar ist.

9. Sattelfahrzeug (1) nach Anspruch 8, weiterhin umfassend:
einen vierten Bremsschlauch (40₄), der die Bremsflüssigkeit enthält, wobei
die Bremsschlauchanschlusseinheit (140) ein viertes Fixierungsloch (141₁) darin hat,
wobei der vierte Bremsschlauch (40₄) einen vierten Schlauchhauptkörper (50₄), eine vierte Befestigung (60₄) und ein viertes drehbares Fixierungselement (70₄) hat, wobei die vierte Befestigung (60₄) an die Flüssigkeitsdrucksteuerungsvorrichtung (100) gekoppelt wird, das vierte drehbare Fixierungselement (70₄) in das vierte Fixierungsloch (141₁) gedreht wird, so dass die vierte Befestigung (60₄) an der Bremsschlauchanschlusseinheit (140) fixiert wird,
die vierte Befestigung (60₄) einen vierten Einführungsdurchführteil (61₄), einen vierten Befestigungsrohrteil (62₄) und einen vierten hervorstehenden Teil (63₄) hat,
der vierte Einführungsdurchführteil (61₄) ein viertes Einführungsdurchführloch (61U₄) umfasst, durch das das vierte drehbare Fixierungselement (70₄) eingeführt wird;
der vierte Befestigungsrohrteil (62₄) mit dem vierten Einführungsdurchführteil (61₄) verbunden ist und am vierten Schlauchhauptkörper (50₄) befestigt ist; und
der vierte hervorstehende Teil (63₄) seitlich von einer vierten Seitenfläche (61T₄) des vierten Einführungsdurchführteils (61₄) hervorsteht, und
der vierte hervorstehende Teil (63₄) an die zweite Befestigung (60₂) anstößt, diese kontaktiert oder mit dieser kontaktierbar ist.

10. Sattelfahrzeug (1) nach Anspruch 9, wobei
das dritte drehbare Fixierungselement (70₃) und das vierte drehbare Fixierungselement (70₄) so angeordnet sind, dass sie liniensymmetrisch zueinander in Bezug auf einen Bisektor (P) eines Liniensegments (CL3) sind, das eine erste Achse (AX1) des ersten drehbaren Fixierungselements (70₁) und eine zweite Achse (AX2) des zweiten drehbaren Fixierungselements (70₂) verbindet, und
ein Intervall, das zwischen dem dritten drehbaren Fixierungselement (70₃) und dem vierten drehbaren Fixierungselement (70₄) produziert wird, größer als ein Intervall (L2) ist, das zwischen dem ersten drehbaren Fixierungselement (70₁) und dem zweiten drehbaren Fixierungselement (70₂) produziert wird.

11. Sattelfahrzeug (1) nach Anspruch 10, wobei
eine erste Verbindungslinie (CL1), die die erste Achse (AX1) des ersten drehbaren Fixierungselements (70₁) und eine dritte Achse (AX3) des dritten drehbaren Fixierungselements (70₃) verbindet, sich mit einer zweiten Verbindungslinie (CL2), die die zweite Achse (AX2) des zweiten drehbaren Fixierungselements (70₂) und eine vierte Achse (AX4) des vierten drehbaren Fixierungselements (70₄) schneidet; und optional
die erste Verbindungslinie (CL1) und die zweite Verbindungslinie (CL2) einen spitzen Winkel (α) bilden.

12. Sattelfahrzeug (1) nach einem der Ansprüche 1 bis 11, wobei
die Flüssigkeitsdrucksteuerungsvorrichtung (100) einen ersten und einen zweiten internen Flussweg (145, 146), einen ersten Kommunikationsflussweg und einen zweiten Kommunikationsflussweg umfasst,
der erste und der zweite interne Flussweg (145, 146) im Inneren der Bremsschlauchanschlusseinheit (140) produziert werden;
der erste Kommunikationsflussweg im Inneren der ersten Befestigung (60₁) und des ersten drehbaren Fixierungselements (70₁) produziert wird, so dass er mit dem ersten internen Flussweg (145) kommuniziert wird; und
der zweite Kommunikationsflussweg im Inneren der zweiten Befestigung (60₂) und dem zweiten drehbaren Fixierungselement (70₂) produziert wird, so dass er mit dem zweiten internen Flussweg (146) kommuniziert wird.

13. Sattelfahrzeug (1) nach einem der vorstehenden Ansprüche, wobei
eines oder mehrere des dritten und/oder vierten Einführungsdurchführteils (61₃, 61₄) eine ringförmige Form hat/haben; und/oder
eines oder mehrere des ersten, zweiten, dritten und/oder vierten drehbaren Fixierungselements (70₁, 70₂, 70₃, 70₄) eine Schraube umfasst/umfassen; und/oder
eines oder mehrere des ersten, zweiten, dritten und/oder vierten Fixierungslochs (141₁, 141₂, 141₃, 141₄) ein Schraubloch umfasst/umfassen; und/oder
eines oder mehrere des ersten, zweiten, dritten und/oder vierten drehbaren Fixierungselements (70₁, 70₂, 70₃, 70₄) in das entsprechende erste, zweite, dritte und/oder vierte Fixierungsloch (141₁, 141₂, 141₃, 141₄) geschraubt wird/werden, so dass die entsprechende erste, zweite, dritte und/oder vierte Befestigung (60₁, 60₂, 60₃, 60₄) an der Bremsschlauchanschlusseinheit (140) fixiert wird.

14. System umfassend:
einen ersten Bremsschlauch (40₁);
einen zweiten Bremsschlauch (40₂); und
eine Flüssigkeitsdrucksteuerungsvorrichtung (100) für ein Sattelfahrzeug;
wobei der erste und der zweite Bremsschlauch (40₁, 40₂) so konfiguriert sind, dass sie eine Bremsflüssigkeit enthalten;
wobei die Flüssigkeitsdrucksteuerungsvorrichtung (100) eine Bremsschlauchanschlusseinheit (140) umfasst und konfiguriert ist zur Steuerung eines Flüssigkeitsdrucks der Bremsflüssigkeit, die zu einem Bremselement (8,12), das an die Bremsschlauchanschlusseinheit (140) angeschlossen ist oder angeschlossen werden kann, übertragen werden soll, wobei die Bremsschlauchanschlusseinheit (140) ein erstes und ein zweites Fixierungsloch (141 1412) darin hat, wobei das erste Fixierungsloch (141₁) an den ersten Bremsschlauch (40₁) angeschlossen ist oder angeschlossen werden kann und das zweite Fixierungsloch (1412) an den zweiten Bremsschlauch (40₂) angeschlossen ist oder angeschlossen werden kann;
wobei der erste Bremsschlauch (40₁) einen ersten Schlauchhauptkörper (50₁), eine erste Befestigung (60₁) und ein erstes drehbares Fixierungselement (70₁) umfasst, wobei die erste Befestigung (60₁) an die Flüssigkeitsdrucksteuerungsvorrichtung (100) gekoppelt wird oder gekoppelt werden kann, das erste drehbare Fixierungselement (70₁) in das erste Fixierungsloch (141₁) gedreht wird oder gedreht werden kann, so dass die erste Befestigung (60₁) an der Bremsschlauchanschlusseinheit (140) fixiert wird;
wobei der zweite Bremsschlauch (40₂) einen zweiten Schlauchhauptkörper (50₂), eine zweite Befestigung (60₂) und ein zweites drehbares Fixierungselement (70₂) umfasst, wobei die zweite Befestigung (60₂) an die Flüssigkeitsdrucksteuerungsvorrichtung (100) gekoppelt wird oder gekoppelt werden kann, das zweite drehbare Fixierungselement (70₂) in das zweite Fixierungsloch (141₂) gedreht wird oder gedreht werden kann, so dass die zweite Befestigung (60₂) an der Bremsschlauchanschlusseinheit (140) fixiert wird;
wobei die erste Befestigung (60₁) einen ersten Einführungsdurchführteil (61₁), einen ersten Befestigungsrohrteil (62₁) und einen ersten hervorstehenden Teil (63₁) umfasst;
wobei der erste Einführungsdurchführteil (61₁) ein erstes Einführungsdurchführloch (61 Uᵢ), durch das das erste drehbare Fixierungselement (70₁) eingeführt wird oder eingeführt werden kann, umfasst;
wobei der erste Befestigungsrohrteil (62₁) mit dem ersten Einführungsdurchführteil (61₁) verbunden ist und an dem ersten Schlauchhauptkörper (50₁) befestigt wird oder befestigt werden kann;
wobei der erste hervorstehende Teil (63₁) aus oder seitlich von einer ersten Seitenfläche (61 Tᵢ) des ersten Einführungsdurchführteils (61₁) hervorsteht;
**dadurch gekennzeichnet, dass**
der erste hervorstehende Teil (63₁) an die zweite Befestigung anstößt, diese kontaktiert oder mit dieser kontaktierbar ist, wenn die erste Befestigung an der Bremsschlauchanschlusseinheit (60₂) fixiert ist; wobei
die zweite Befestigung (60₂) einen zweiten Einführungsdurchführteil (61₂) umfasst; und
der erste und der zweite Einführungsdurchführteil (61₁, 61₂) eine ringförmige Form haben.

## Revendications

1. Véhicule à monture de selle ou à enjamber (1) comprenant:
un premier tuyau de frein et un deuxième tuyau de frein (40₁, 40₂) respectivement contenant un liquide de frein; et
un dispositif de contrôle de pression de liquide (100) contenant une unité de connexion de tuyau de frein (140) et configuré pour commander une pression du liquide de frein pour transfert vers un élément de frein (8, 12) connecté à l'unité de connexion de tuyau de frein (140), l'unité de connexion de tuyau de frein (140) présentant un premier trou de fixation et un deuxième trou de fixation (141₁, 141₂) dans celle-ci, le premier trou de fixation (141₁) étant connecté au premier tuyau de frein (40₁), le deuxième trou de fixation (141₂) étant connecté au deuxième tuyau de frein (40₂),
le premier tuyau de frein (40₁) comprenant un premier corps principal de tuyau (50₁), un premier raccord (60₁) et un premier élément de fixation rotatif (70₁), le premier raccord (60₁) étant couplé au dispositif de commande de pression du liquide (100), le premier élément de fixation rotatif (70₁) en rotation dans le premier trou de fixation (141₁) de façon à fixer le premier raccord (60₁) à l'unité de connexion du tuyau de frein (140),
le deuxième tuyau de frein (40₂) comprenant un deuxième corps principal de tuyau (50₂), un deuxième raccord (60₂) et un deuxième élément de fixation rotatif (70₂), le deuxième raccord (60₂) étant couplé au dispositif de commande de pression du liquide (100), le deuxième élément de fixation rotatif (70₂) pivotant dans le deuxième trou de fixation (141₂) de façon à fixer le deuxième raccord (60₂) à l'unité de connexion du tuyau de frein (140),
le premier raccord (60₁) ayant une première pièce traversante d'insertion (61₁), une première pièce tubulaire d'attachement (62₁) et une première pièce en saillie (63₁),
la première pièce traversante d'insertion (61₁) comprenant un premier trou traversant d'insertion (61 Uᵢ) grâce auquel le premier élément de fixation pivotant (70₁) est inséré;
la première pièce tubulaire d'attachement (62₁) étant connectée à la première pièce traversante d'insertion (61₁) et étant attachée au premier corps principal de tuyau (50₁); et
la première pièce en saillie (63₁) dépasse de (ou longe) une première surface latérale (61 Tᵢ) de la première pièce traversante d'insertion (61₁), **caractérisé en ce que**
la première pièce en saillie (63₁) jouxte, touche ou peut être touchée par le deuxième raccord (60₂) ; où
le deuxième raccord (60₂) comporte une deuxième pièce traversante d'insertion (61₂); et
la première pièce traversante d'insertion et la deuxième pièce traversante d'insertion (61₁, 61₂) sont de forme annulaire.

2. Véhicule à monture de selle (1) selon la revendication 1, où le deuxième raccord (60₂) comporte une deuxième pièce tubulaire d'attachement (62₂),
la deuxième pièce traversante d'insertion (61₂) comporte un deuxième trou traversant d'insertion (61 U₂) à travers lequel est inséré le deuxième élément de fixation rotatif (70₂); et
la deuxième pièce tubulaire d'attachement (62₂) est connectée à la deuxième pièce traversante d'insertion (61₂) et est attachée au deuxième corps principal de tuyau (50₂), et
la première pièce en saillie (63₁) jouxte, touche ou peut être touchée par une deuxième surface latérale (61T₂) de la deuxième pièce traversante d'insertion (61₂) du deuxième raccord (60₂).

3. Véhicule à monture de selle (1) selon la revendication 2, où
le deuxième raccord (60₂) présente une deuxième pièce en saillie (63₂) faisant saillie latéralement de la deuxième surface latérale (61T₂) de la deuxième pièce traversante d'insertion (61₂), et
la deuxième pièce en saillie (63₂) jouxte, touche ou peut être touchée par le premier raccord (60₁).

4. Véhicule à monture de selle (1) selon la revendication 3, où
la deuxième pièce en saillie (63₂) jouxte, touche ou peut être touchée par la première surface latérale (61T₁) du premier raccord (60₁).

5. Véhicule à monture de selle (1) selon l'une quelconque des revendications 1 à 4, où
dans une vue en plan d'une surface de l'unité de connexion de tuyau de frein (140), la première pièce en saillie (63₁) dépasse sur un côté gauche d'une direction allant d'un premier axe (AX₁) du premier élément de fixation rotatif (70₂) vers un deuxième axe (AX₂) du deuxième élément de fixation rotatif (70₂).

6. Véhicule à monture de selle (1) selon la revendication 2, où
dans une vue en plan de la surface de l'unité de connexion de tuyau de frein (140), une longueur en saillie (L1) de la première pièce en saillie (63₁) est supérieure à un intervalle (L2) entre la première pièce traversante d'insertion (61₁) et la deuxième pièce traversante d'insertion (61₂).

7. Véhicule à monture de selle (1) selon la revendication 6, où
dans la vue en plan de la surface de l'unité de connexion de tuyau de frein (140), l'intervalle (L2) entre la première pièce traversante d'insertion (61₁) et la deuxième pièce traversante d'insertion (61₂) est inférieur à un diamètre extérieur (L3) de la première pièce traversante d'insertion (61₁).

8. Véhicule à monture de selle (1) selon l'une quelconque des revendications 1 à 7, comprenant en outre :
un troisième tuyau de frein (40₃) contenant le liquide de frein, où
l'unité de connexion de tuyau de frein (140) possède un troisième trou de fixation (141₃) dans celle-ci,
le troisième tuyau de frein (40₃) comprend un troisième corps principal de tuyau (50₃), un troisième raccord (60₃) et un troisième élément de fixation rotatif (70₃), le troisième raccord (60₃) étant couplé au dispositif de commande de pression du liquide (100), le troisième élément de fixation rotatif (70₃) pivotant dans le troisième trou de fixation (141₃) de l'unité de connexion du tuyau de frein (140) pour fixer le troisième raccord (60₃) à l'unité de connexion de liquide de frein (140),
le troisième raccord (60₃) comporte une troisième pièce traversante d'insertion (61₃), une troisième pièce tubulaire d'attachement (62₃) et une troisième pièce en saillie (63₃),
la troisième pièce traversante d'insertion (61₃) comprend un troisième trou traversant d'insertion (61U₃) à travers lequel est inséré le troisième élément de fixation rotatif (70₃) ;
la troisième pièce tubulaire d'attachement (62₃) est connectée à la troisième pièce traversante d'insertion (61₃) et est attachée au troisième corps principal de tuyau (50₃) ; et
la troisième pièce en saillie (63₃) dépasse latéralement d'une troisième surface latérale (61T₃) de la troisième pièce traversante d'insertion (61₃), et
la troisième pièce en saillie (63₃) jouxte, touche ou peut être touchée par le premier raccord (60₁).

9. Véhicule à monture de selle (1) selon la revendication 8, comprenant en outre :
un quatrième tuyau de frein (40₄) contenant le liquide de frein, où
l'unité de connexion de tuyau de frein (140) possède un quatrième trou de fixation (141₁) dans celle-ci,
le quatrième tuyau de frein (40₄) comprend un quatrième corps principal de tuyau (50₄), un quatrième raccord (60₄) et un quatrième élément de fixation rotatif (70₄), le quatrième raccord (60₄) étant couplé au dispositif de commande de pression du liquide (100), le quatrième élément de fixation rotatif (70₄) pivotant dans le quatrième trou de fixation (141₁,) pour fixer le quatrième raccord (60₄) à l'unité de connexion de tuyau de frein (140),
le quatrième raccord (60₄) comporte une quatrième pièce traversante d'insertion (61₄), une quatrième pièce tubulaire d'attachement (62₄) et une quatrième pièce en saillie (63₄),
la quatrième pièce en saillie (61₄) comprend un quatrième trou traversant d'insertion (61U₄) à travers lequel est inséré le quatrième élément de fixation rotatif (70₄);
la quatrième pièce tubulaire d'attachement (62₄) est connectée à la quatrième pièce traversante d'insertion (61₄) et est attachée au quatrième corps principal de tuyau (50₄); et
la quatrième pièce en saillie (63₄) dépasse latéralement d'une quatrième surface latérale (61T₄) de la quatrième pièce traversante d'insertion (61₄), et
la quatrième pièce en saillie (63₄) jouxte, touche ou peut être touchée par le deuxième raccord (60₂).

10. Véhicule à monture de selle (1) selon la revendication 9, où
le troisième élément de fixation rotatif (70₃) et le quatrième élément de fixation rotatif (70₄) sont disposés pour s'aligner symétriquement l'un par rapport à l'autre en référence à une bissectrice (P) d'un segment de ligne (CL3) reliant un premier axe (AX1) du premier élément de fixation rotatif (70₁) et un deuxième axe (AX2) du deuxième élément de fixation rotatif (70₂), et
un intervalle produit entre le troisième élément de fixation rotatif (70₃) et le quatrième élément de fixation rotatif (70₄) est supérieur à un intervalle (L2) produit entre le premier élément de fixation rotatif (70₁) et le deuxième élément de fixation rotatif (70₂).

11. Véhicule à monture de selle (1) selon la revendication 10, où
une première ligne de connexion (CL1) reliant le premier axe (AX1) du premier élément de fixation rotatif (70₁) et un troisième axe (AX3) du troisième élément de fixation rotatif (70₃) coupe une deuxième ligne de connexion (CL2) reliant le deuxième axe (AX2) du deuxième élément de fixation rotatif (70₂) et un quatrième axe (AX4) du quatrième élément de fixation rotatif (70₄) ; et éventuellement
la première ligne de connexion (CL1) et la deuxième ligne de connexion (CL2) forment un angle aigu (α).

12. Véhicule à monture de selle (1) selon l'une quelconque des revendications 1 à 11, où
le dispositif de commande de pression du liquide (100) contient un premier circuit d'écoulement interne et un deuxième circuit d'écoulement interne (145, 146), un premier circuit d'écoulement de communications et un deuxième circuit d'écoulement de communications,
le premier circuit d'écoulement interne et le deuxième circuit d'écoulement interne (145, 146) sont produits à l'intérieur de l'unité de connexion de tuyau de frein (140) ;
le premier circuit d'écoulement de communications est produit à l'intérieur du premier raccord (60₁) et du premier élément de fixation rotatif (70₁) pour être en communication avec le premier circuit d'écoulement interne (145) ; et
le deuxième circuit d'écoulement de communications est produit à l'intérieur du deuxième raccord (60₂) et du deuxième élément de fixation rotatif (70₂) pour être en communication avec le deuxième circuit d'écoulement interne (146).

13. Véhicule à monture de selle (1) selon l'une quelconque des revendications précédentes, où
l'une ou plusieurs de la troisième pièce traversante d'insertion et/ou de la quatrième pièce traversante d'insertion (61₃, 61₄) présente une forme annulaire ; et/ou
l'un ou plusieurs des premier, deuxième, troisième et/ou quatrième éléments de fixation rotatifs (70₁, 70₂, 70₃, 70₄) comprennent un boulon ; et/ou
l'un ou plusieurs des premier, deuxième, troisième et/ou quatrième trous de fixation (141₁, 141₂, 141₃, 141₄) comprennent un trou de vis ; et/ou
l'un ou plusieurs des premier, deuxième, troisième et/ou quatrième éléments de fixation rotatifs (70₁, 70₂, 70₃, 70₄) sont vissés dans les premier, deuxième, troisième et/ou quatrième trous de fixation respectifs (141₁, 141₂, 141₃, 141₄) pour fixer les premier, deuxième, troisième et/ou quatrième raccords (60₁, 60₂, 60₃, 60₄) respectifs à l'unité de connexion de tuyau de frein (140).

14. Système comprenant:
un premier tuyau de frein (40₁);
un deuxième tuyau de frein (40₂); et
un dispositif de commande de pression du liquide (100) pour véhicule à monture de selle ;
le premier tuyau de frein et le deuxième tuyau de frein (40₁, 40₂) étant configurés pour contenir un liquide de frein ;
le dispositif de contrôle de pression de liquide (100) contenant une unité de connexion de tuyau de frein (140) et étant configuré pour commander une pression du liquide de frein pour transfert vers un élément de frein (8, 12) connecté ou pouvant être connecté à l'unité de connexion de tuyau de frein (140), l'unité de connexion de tuyau de frein (140) présentant un premier trou de fixation et un deuxième trou de fixation (141 1412) dans celle-ci, le premier trou de fixation (141₁) étant connecté ou pouvant être connecté au premier tuyau de frein (40₁), le deuxième trou de fixation (1412) étant connecté ou pouvant être connecté au deuxième tuyau de frein (40₂) ;
le premier tuyau de frein (40₁) comprenant un premier corps principal de tuyau (50₁), un premier raccord (60₁) et un premier élément de fixation rotatif (70₁), le premier raccord (60₁) étant couplé ou pouvant être couplé au dispositif de commande de pression du liquide (100), le premier élément de fixation rotatif (70₁) pivotant ou pouvant pivoter dans le premier trou de fixation (141₁) pour fixer le premier raccord (60₁) à l'unité de connexion de tuyau de frein (140) ;
le deuxième tuyau de frein (40₂) comprend un deuxième corps principal de tuyau (50₂), un deuxième raccord (60₂) et un deuxième élément de fixation rotatif (70₂), le deuxième raccord (60₂) étant couplé ou pouvant être couplé au dispositif de commande de pression du liquide (100), le deuxième élément de fixation rotatif (70₂) pivotant ou pouvant pivoter dans le deuxième trou de fixation (141₂) pour fixer le deuxième raccord (60₂) à l'unité de connexion de tuyau de frein (140) ;
le premier raccord (60₁) comprenant une première pièce traversante d'insertion (61₁), une première pièce tubulaire d'attachement (62₁) et une première pièce en saillie (63₁) ;
la première pièce traversante d'insertion (61₁) comprenant un premier trou traversant d'insertion (61 Uᵢ) à travers lequel est inséré ou peut être inséré le premier élément de fixation rotatif (70₁) ;
la première pièce tubulaire d'attachement (62₁) étant connectée à la première pièce traversante d'insertion (61₁) et étant attachée ou pouvant être attachée au premier corps principal de tuyau (50₁) ;
la première pièce en saillie (63₁) s'étendant depuis ou sur le côté d'une première surface latérale (61 Tᵢ) de la première pièce traversante d'insertion (61₁) ;
**caractérisé en ce que**
la première pièce en saillie (63₁) jouxte, touche ou peut être touchée par le deuxième raccord lorsque le premier raccord est fixé à l'unité de connexion de tuyau de frein (60₂) ; où
le deuxième raccord (60₂) comporte une deuxième pièce traversante d'insertion (61₂); et
la première pièce traversante d'insertion et la deuxième pièce traversante d'insertion (61₁, 61₂) sont de forme annulaire.
